(19) Europäisches Patentamt
European Patent Office
Office européen des brevets

(11) **EP 4 521 274 A1**

(12) **EUROPEAN PATENT APPLICATION**
published in accordance with Art. 153(4) EPC

(43) Date of publication:
**12.03.2025 Bulletin 2025/11**

(21) Application number: **23802694.2**

(22) Date of filing: **28.04.2023**

(51) International Patent Classification (IPC):
*G06F 21/44* (2013.01)

(52) Cooperative Patent Classification (CPC):
**G06F 21/44; G06F 21/62**

(86) International application number:
**PCT/CN2023/091573**

(87) International publication number:
**WO 2023/216922 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.05.2022 CN 202210495392**

(71) Applicant: **Huawei Technologies Co., Ltd.
Shenzhen, Guangdong 518129 (CN)**

(72) Inventors:
• **MENG, Shutong
Shenzhen, Guangdong 518129 (CN)**
• **WEI, Ye
Shenzhen, Guangdong 518129 (CN)**

(74) Representative: **Maiwald GmbH
Engineering
Elisenhof
Elisenstrasse 3
80335 München (DE)**

(54) **TARGET DEVICE SELECTION IDENTIFICATION METHOD, TERMINAL DEVICE, SYSTEM AND STORAGE MEDIUM**

(57) Embodiments of this application provide an identification method for target device selection, a terminal device, a system, and a storage medium. The method includes: detecting a first action of a user; in response to the first action, sending an audio signal, and sending a recording request message to a plurality of controllable devices; and calculating a Doppler frequency shift amount corresponding to an audio signal collected by the controllable device, and determining a controllable device having a specific Doppler frequency shift amount as a target device. Corresponding trigger conditions of start actions are set for an audio playing operation of the portable device and an audio collecting operation of the controllable device, so that power consumption of the portable device and the controllable device can be reduced. In addition, starting audio collection when the trigger condition is met can further reduce a risk of user privacy leakage, and improve user privacy security.

FIG. 8b

## Description

## TECHNICAL FIELD

This application relates to the field of multi-terminal interaction technologies, and in particular, to an identification method for target device selection, a terminal device, a system, and a storage medium.

## BACKGROUND

With development of smart devices, a selection intention of a user for a device may be identified by using non-touch natural interaction behavior, so that the user can control the device conveniently

In a home environment, if a user wants to select, by using the non-touch natural interaction behavior, a device for control, a speaker of a portable device of the user continuously emits a high-frequency (ultrasonic) sine wave signal of, for example, 19 kHz, and a microphone of another device in the home environment continuously collect the signal. When the user makes a specific gesture by using the portable device, and the portable device moves relative to a target device, the target device recognizes the specific gesture of the user, so that the portable device determines, from the another device in the home environment, the target device selected by the user. A device having a specific Doppler frequency shift is the target device selected by the user.

However, in the foregoing manner, the portable device of the user needs to continuously generate a sound, and other devices in the home environment need continuous recording to recognize the gesture made by the user. This manner causes high power consumption and brings a potential risk of user privacy leakage.

## SUMMARY

Embodiments of this application provide an identification method for target device selection, a terminal device, a system, and a storage medium. According to the identification method for target device selection, at least the foregoing problems of high power consumption and the potential risk of user privacy leakage can be resolved.

According to a first aspect, an embodiment of this application provides an identification method for target device selection, applied to a portable device. The portable device is wirelessly connected to a plurality of controllable devices, and the method includes: detecting a first action of a user; in response to the first action, sending an audio signal, and sending a recording request message to the controllable device; obtaining an audio signal collected by the controllable device; and calculating a Doppler frequency shift amount corresponding to the audio signal collected by the controllable device, and determining a controllable device having a specific Doppler frequency shift amount as a target device. The portable device detects the first action of the user, so that after the first action of the user is detected, the portable device is triggered to start to send the audio signal, and the controllable devices in a scenario are controlled to start to collect the audio signal sent by the portable device. Corresponding trigger conditions of start actions are set for an audio playing operation of the portable device and an audio collecting operation of the controllable device, so that power consumption of the portable device and the controllable device can be reduced. In addition, starting audio collection when the trigger condition is met can further reduce a risk of user privacy leakage, and improve user privacy security.

Further, that the portable device is wirelessly connected to a plurality of controllable devices includes: The portable device establishes near field communication connections to the plurality of controllable devices, where the near field communication connection includes a Bluetooth communication connection or a Wi-Fi connection.

Further, the portable device and the plurality of controllable devices log in to a same account. In a distributed scenario, some features of the distributed scenario may be used to perform operations such as device discovery, detection of a connection status between devices, and detection of a function supported by another device in the scenario, to improve convenience of information sharing before interaction between devices.

Further, before the detecting a first action of a user, the method further includes: detecting the controllable device connected to the portable device, where the controllable device has at least an audio collection function. Before the first action of the user is detected, the controllable devices connected to the portable device are detected, so that in a stage of identifying the target device selected by the user, the portable device may perform corresponding interaction with the controllable devices in the scenario in a targeted manner, to identify the target device selected by the user. In this way, device power consumption may be reduced by using the targeted interaction.

Further, before the calculating a Doppler frequency shift amount corresponding to the audio signal collected by the controllable device, and determining a controllable device having a specific Doppler frequency shift amount as a target device, the method further includes: if a specified condition is met, stopping sending the audio signal, and sending a recording stop request message to the controllable device. After the specified condition is met, the foregoing audio playing and audio collecting operations are stopped. Corresponding trigger conditions of the start actions and stop actions are set for the audio playing operation of the portable device and the audio collecting operation of the controllable device, so that the power consumption of the portable device and the controllable device can be reduced. In addition, starting the audio collection when the trigger condition is met can further reduce the risk of user privacy leakage, and improve the user privacy security.

Further, if the specified condition is met, the stopping sending the audio signal, and sending a recording stop request message to the controllable device includes: detecting a second action of the user; and in response to the second action, stopping sending the audio signal, and sending the recording stop request message to the controllable device. Whether the portable device meets the specified condition is detected, and when the specified condition is met, the portable device is triggered to stop sending the audio signal (that is, stop playing an audio), and send the recording stop request message to the controllable device, so that the controllable devices stop collecting the audio signal. In this control manner, the portable device and the controllable devices may be controlled to perform the audio playing action and the audio collection actions only within a specific time period, so that the power consumption of the devices can be reduced. In addition, the controllable devices are controlled to perform audio collection within specific time, so that the risk of user privacy leakage can be reduced, and the user privacy security can be improved.

Further, the first action is an action of a specific gesture, and the second action includes the first action, and the specific gesture includes the second action or the specific gesture is the second action.

Further, if the specified condition is met, the stopping sending the audio signal, and sending a recording stop request message to the controllable device includes: after specified time starting from detecting the first action of the user, stopping sending the audio signal, and sending the recording stop request message to the controllable device. In some implementations, the specified condition may further be: after specified time starting from detecting the first action of the user by the portable device, controlling, in an automatic timing manner, to stop an audio sending action of the portable device and audio collection actions of the controllable devices. Similarly, in this control manner, the portable device and the controllable devices may be controlled to perform the audio playing action and the audio collection actions only within the specific time, so that the power consumption of the devices can be reduced. In addition, the controllable devices are controlled to perform audio collection within the specific time, so that the risk of user privacy leakage can be reduced, and the user privacy security can be improved.

Further, the determining a controllable device having a specific Doppler frequency shift amount as a target device includes: determining, based on the Doppler frequency shift amount corresponding to the audio signal collected by the controllable device, a controllable device having a largest Doppler frequency shift amount as the target device. When the user makes a specific gesture by using the portable device, a horizontal component of a tangential velocity of a microphone of the portable device points to the target device. Therefore, a Doppler frequency shift amount corresponding to an audio signal collected by the target device is largest compared with Doppler frequency shift amounts corresponding to audio signals collected by other controllable devices, so that a controllable device having a largest Doppler frequency shift amount may be identified as the target device.

Further, the determining a controllable device having a specific Doppler frequency shift amount as a target device includes: simulating a first waveform based on a frequency change generated by a horizontal component of a tangential velocity of a microphone of the portable device; simulating, based on the Doppler frequency shift amount corresponding to the audio signal collected by the controllable device, a second waveform that corresponds to each controllable device and that is used to reflect a frequency shift change; and screening out, from the plurality of second waveforms, a target second waveform with a highest similarity to the first waveform, and determining a controllable device corresponding to the target second waveform as the target device. When the user makes the specific gesture by using the portable device, the horizontal component of the tangential velocity of the microphone of the portable device points to the target device. Therefore, after the audio signal is collected by the target device, a corresponding waveform (the second waveform) is simulated based on a change status of a Doppler frequency shift amount corresponding to the collected audio signal, and a corresponding waveform (the second waveform) may further be simulated based on a change status of a Doppler frequency shift amount corresponding to an audio signal collected by another controllable device. The portable device simulates the first waveform based on the frequency change generated by the horizontal component of the tangential velocity of the microphone, and through similarity comparison of the waveforms, a similarity between the second waveform of the target device and the first waveform is highest compared with similarities between other controllable devices and the first waveform. Therefore, a corresponding controllable device whose second waveform has a highest similarity to the first waveform may be identified as the target device.

According to a second aspect, an embodiment of this application further provides an identification method for target device selection, applied to a portable device. The portable device is wirelessly connected to a plurality of controllable devices, and the method includes: detecting a first action of a user; in response to the first action, collecting an audio signal, and sending an audio playing request message to the plurality of controllable devices; and calculating a Doppler frequency shift amount corresponding to the collected audio signal, and determining a controllable device having a specific Doppler frequency shift amount as a target device. In some embodiments, the portable device is used as a sound generation end to send an audio signal, and the controllable device is used as a collection end to collect the audio signal sent by the portable device. However, a device at the collection end needs to support a function of high-frequency sampling and sound receiving, and an audio sampling frequency needs to be at least greater than 40 kHz. However, some devices cannot support high-frequency sampling and sound receiving due to hardware limitations. According to the identification method for target device selection provided in the second aspect, on a basis of the identification method for target device selection provided in the first aspect, the sound generation end and a sound receive end may be interchanged and adjusted, that is, the controllable device may be used as the sound generation end to send an audio signal, and the portable device is used as the collection end to collect the audio signal sent by the portable device. In this manner, a problem that high-frequency sampling and sound receiving cannot be supported due to hardware limitations can be overcome, and a hardware function of the controllable device does not need to be upgraded, thereby reducing device costs.

Further, that the portable device is wirelessly connected to a plurality of controllable devices includes: The portable device establishes near field communication connections to the plurality of controllable devices, where the near field communication connection includes a Bluetooth communication connection or a Wi-Fi connection.

Further, the portable device and the plurality of controllable devices log in to a same account. In a distributed scenario, some features of the distributed scenario may be used to perform operations such as device discovery, detection of a connection status between devices, and detection of a function supported by another device in the scenario, to improve convenience of information sharing before interaction between devices.

Further, before the detecting a first action of a user, the method further includes: detecting the controllable device connected to the portable device, where the controllable device has at least an audio sound generation function. Before the first action of the user is detected, the controllable devices connected to the portable device are detected, so that in a stage of identifying the target device selected by the user, the portable device may perform corresponding interaction with the controllable devices in the scenario in a targeted manner, to identify the target device selected by the user. In this way, device power consumption may be reduced by using the targeted interaction.

Further, in response to the first action, the collecting an audio signal, and sending an audio playing request message to the plurality of controllable devices includes: in response to the first action, sending the audio playing request message to the controllable devices, so that the controllable devices separately play audios based on agreed frequencies; and in response to the first action, controlling a microphone of the portable device to collect, based on the agreed frequencies, the audios played by the controllable devices. To improve instant identification of the target device for the user, the controllable devices may be controlled to play the audios simultaneously. To collect the audio played by each controllable device when the controllable devices play the audios simultaneously, a frequency of audio playing by each controllable device may be pre-agreed, so that the portable device may collect the audio played by each controllable device at the pre-agreed frequency.

Further, the controllable devices separately play audios based on agreed frequencies includes: allocating, by the controllable device, a frequency band based on a specific frequency difference, and playing an audio at a corresponding frequency based on a frequency allocated to the controllable device.

Further, before the calculating a Doppler frequency shift amount corresponding to the collected audio signal, and determining a controllable device having a specific Doppler frequency shift amount as a target device, the method further includes: if a specified condition is met, stopping collecting the audio signal, and sending an audio playing stop request message to the controllable devices.

Further, if the specified condition is met, the stopping collecting the audio signal, and sending an audio playing stop request message to the controllable devices includes: detecting a second action of the user; and in response to the second action, stopping collecting the audio signal, and sending the audio playing stop request message to the controllable devices. Whether the portable device meets the specified condition is detected, and when the specified condition is met, the portable device is triggered to stop sending the audio signal (that is, stop playing an audio), and send the recording stop request message to the controllable devices, so that the controllable devices stop collecting audio signals. In this control manner, the portable device and the controllable devices may be controlled to perform the audio playing action and the audio collection actions only within specific time, so that power consumption of the devices can be reduced. In addition, the controllable devices are controlled to perform audio collection within specific time, so that a risk of user privacy leakage can be reduced, and user privacy security can be improved.

Further, the first action is an action of a specific gesture, and the second action includes the first action, and the specific gesture includes the second action or the specific gesture is the second action.

Further, if the specified condition is met, the stopping collecting the audio signal, and sending an audio playing stop request message to the controllable devices includes: after specified time starting from detecting the first action of the user, stopping collecting the audio signal, and sending the audio playing stop request message to the controllable devices. In some implementations, the specified condition may further be: after specified time starting from detecting the first action of the user by the portable device, controlling, in an automatic timing manner, to stop an audio sending action of the portable device and audio collection actions of the controllable devices. Similarly, in this control manner, the portable device and the controllable devices may be controlled to perform the audio collection action and the audio playing actions only within the specific time, so that the power consumption of the devices can be reduced. In addition, the controllable devices are controlled to perform audio collection within the specific time, so that the risk of user privacy leakage can be reduced, and the user privacy security can be improved.

Further, the determining a controllable device having a specific Doppler frequency shift amount as a target device includes: determining, based on the Doppler frequency shift amount corresponding to the audio signal collected by the controllable device, a controllable device having a largest Doppler frequency shift amount as the target device. When the user makes a specific gesture by using the portable device, a horizontal component of a tangential velocity of a microphone of the portable device points to the target device. Therefore, a Doppler frequency shift amount corresponding to an audio signal collected from the target device is largest compared with Doppler frequency shift amounts corresponding to audio signals collected from other controllable devices, so that a controllable device having a largest Doppler frequency shift amount may be identified as the target device.

Further, the determining a controllable device having a specific Doppler frequency shift amount as a target device includes: simulating a first waveform based on a frequency change generated by a horizontal component of a tangential velocity of a microphone of the portable device; simulating, based on the Doppler frequency shift amount corresponding to the audio signal collected by the controllable device, a second waveform that corresponds to each controllable device and that is used to reflect a frequency shift change; and screening out, from the plurality of second waveforms, a target second waveform with a highest similarity to the first waveform, and determining a controllable device corresponding to the target second waveform as the target device. When the user makes the specific gesture by using the portable device, the horizontal component of the tangential velocity of the microphone of the portable device points to the target device. Therefore, after the audio signal is collected from the target device, a corresponding waveform (the second waveform) is simulated based on a change status of a Doppler frequency shift amount corresponding to the collected audio signal, and a corresponding waveform (the second waveform) may further be simulated based on a change status of a Doppler frequency shift amount corresponding to an audio signal collected from another controllable device. The portable device simulates the first waveform based on the frequency change generated by the horizontal component of the tangential velocity of the microphone, and through similarity comparison of the waveforms, a similarity between the second waveform of the target device and the first waveform is highest compared with similarities between other controllable devices and the first waveform. Therefore, a corresponding controllable device whose second waveform has a highest similarity to the first waveform may be identified as the target device.

According to a third aspect, an embodiment of this application further provides an identification method for target device selection, applied to a controllable device. The controllable device is wirelessly connected to a portable device, and the method includes: receiving a recording request message, and starting to collect an audio signal based on the recording request message; and providing the collected audio signal for the portable device.

Further, the providing the collected audio signal for the portable device includes: sending the collected audio signal to the portable device through a wireless connection to the portable device.

Further, the providing the collected audio signal for the portable device includes: storing the collected audio signal in a distributed database.

According to a fourth aspect, an embodiment of this application further provides an identification method for target device selection, applied to a controllable device. The controllable device is wirelessly connected to a portable device, and the method includes: receiving an audio playing request message, and sending an audio signal based on the audio playing request message.

Further, the sending an audio signal based on the audio playing request message includes: playing an audio based on an agreed frequency.

According to a fifth aspect, an embodiment of this application provides an interaction system, including: a portable device and a plurality of controllable devices. The portable device is wirelessly connected to the plurality of controllable devices; and the portable device is configured to perform the following steps: detecting a first action of a user; in response to the first action, sending an audio signal, and sending a recording request message to the controllable device; obtaining an audio signal collected by the controllable device; and calculating a Doppler frequency shift amount corresponding to the audio signal collected by the controllable device, and determining a controllable device having a specific Doppler frequency shift amount as a target device. The controllable device is configured to perform the following steps: receiving the recording request message, and starting to collect the audio signal based on the recording request message; and providing the collected audio signal for the portable device.

According to a sixth aspect, an embodiment of this application provides a portable device, including a processor and a memory. The memory is configured to store at least one instruction, and when the instruction is loaded and executed by the processor, the identification method for target device selection provided in the first aspect or the second aspect is implemented.

According to a seventh aspect, an embodiment of this application provides an interaction system, including the portable device provided in the sixth aspect and a plurality of remote devices, where the portable device is wirelessly connected to the plurality of remote devices.

According to an eighth aspect, an embodiment of this application provides a computer-readable storage medium. The computer-readable storage medium stores a computer program. When the computer program is executed by a processor, the identification method for target device selection provided in the first aspect or the second aspect is implemented.

## BRIEF DESCRIPTION OF DRAWINGS

To describe the technical solutions in embodiments of this application or in the conventional technology more clearly, the following briefly describes the accompanying drawings for describing embodiments or the conventional technology. It is clear that, the accompanying drawings in the following description show only some embodiments recorded in this application, and persons of ordinary skill in the art may still derive other drawings from these accompanying drawings without creative efforts.

FIG. 1 is a diagram of an application scenario to which an embodiment of this application is applicable;

FIG. 2 is a diagram of a specific scenario to which an embodiment of this application is applicable;

FIG. 3 is a flowchart of selecting a target device among a plurality of devices in a related technology;

FIG. 4a is a diagram of a hardware structure of a portable device according to an embodiment of this application;

FIG. 4b is a block diagram of a software structure of a portable device 100 according to an embodiment of this application;

FIG. 5 is a diagram of connections between a portable device and remote devices according to an embodiment of this application;

FIG. 6 is a diagram of function association of hardware of a portable device according to an embodiment of this application;

FIG. 7 is a diagram of functions of a portable device and a remote device according to an embodiment of this application;

FIG. 8a is a flowchart of an identification method for target device selection according to an embodiment of this application;

FIG. 8b is a diagram of a frequency for sending an audio signal by a portable device according to an embodiment of this application;

FIG. 9 is a diagram of a specific application scenario according to an embodiment of this application;

FIG. 10a is a diagram of a specific gesture according to an embodiment of this application;

FIG. 10b is a diagram of a horizontal velocity component brought by a specific gesture according to an embodiment of this application;

FIG. 11 is a diagram of monitoring data of an acceleration and an angular velocity of a portable device according to an embodiment of this application;

FIG. 12 is a waveform graph of a frequency change generated by a horizontal component of a tangential velocity of a microphone of a mobile phone according to an embodiment of this application;

FIG. 13 is a waveform graph of a frequency shift change corresponding to an audio signal collected by a television according to an embodiment of this application;

FIG. 14 is a waveform graph of a frequency shift change corresponding to an audio signal collected by a sound box according to an embodiment of this application;

FIG. 15 is a flowchart of an identification method for target device selection according to another embodiment of this application;

FIG. 16 is a diagram of a frequency for sending an audio signal by a controllable device according to an embodiment of this application; and

FIG. 17 is a diagram of a frequency for sending an audio signal by a controllable device according to another embodiment of this application.

## DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It is clear that, the described embodiments are merely a part rather than all of embodiments of this application. All other embodiments obtained by persons of ordinary skill in the art based on embodiments of this application without creative efforts shall fall within the protection scope of this application.

To clearly describe embodiments of this application, the following correspondingly explains concepts in this application.

Doppler effect means that when there is relative movement between an observer and a wave source, a frequency of a wave received by the observer is different from a frequency of the wave source. For example, an ambulance alarm tone rises when an ambulance approaches the observer, and the tone is low when the ambulance moves away from the observer. Correspondingly, if the ambulance does not move and generates an alarm tone, and the observer moves relative to the stationary ambulance, the alarm tone heard by the observer changes.

A Doppler frequency shift is a difference, caused by the Doppler effect, between a transmit frequency and a receive frequency. When the observer approaches a sound source, a wavelength of a received sound wave is shortened, which may be understood as that the sound wave is compressed. As a result, a quantity of waves propagated within a specific time interval increases, and a frequency becomes high. Conversely, when the observer is away from the sound source, the wavelength becomes longer and the frequency becomes lower.

With continuous development of current device intelligence, a user has an increasingly high requirement on control of an intelligent device. In an environment in which a plurality of intelligent devices are placed, when the user wants to conveniently control a target device in the plurality of intelligent devices or interact with the target device, the user may operate a portable device to make a directional natural gesture, to select the target device, so that the user can interact with the target device or control the target device.

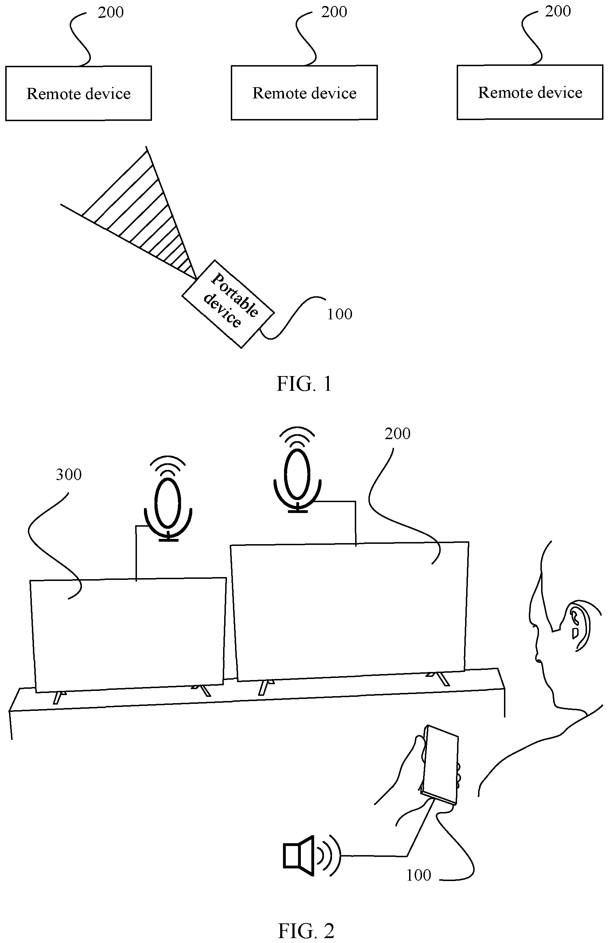

FIG. 1 is a diagram of an application scenario to which an embodiment of this application is applicable. Refer to FIG. 1. The scenario may include a portable device 100 and a plurality of remote devices 200. FIG. 2 is a diagram of a specific scenario to which an embodiment of this application is applicable. For example, refer to FIG. 2. The portable device 100 is a mobile phone, and the plurality of remote devices include a first large-screen device and a second large-screen device. The mobile phone, the first large-screen device, and the second large-screen device are in a same distributed scenario.

Refer to FIG. 1. The user may perform directional interaction with a target device in the plurality of remote devices 200 by using the portable device 100, or control the target device in the plurality of remote devices 200 by using the portable device 100. For example, as shown in FIG. 2, the user may make a directional natural gesture toward the target device in the first large-screen device and the second large-screen device by using the mobile phone, to select the target device of the user. Further, the user may share an image with the target device by using the mobile phone, to display the image on the target device. Alternatively, the user may make a directional natural gesture toward the target device in the first large-screen device and the second large-screen device by using the mobile phone, to select the target device of the user. Further, the user may adjust, by using the mobile phone, adjustable factors such as a volume, a size of a display picture, and a playing speed of the target device.

Before the portable device 100 shown in FIG. 1 interacts with the target device or the portable device 100 controls the target device, the target device selected by the user needs to be identified. To enable the user to naturally and conveniently select the target device from the plurality of remote devices 200 by using the portable device 100, the user may operate the portable device 100 to make a specific gesture. In addition, the portable device 100 may send an ultrasonic signal, and the plurality of remote devices 200 may receive the ultrasonic signal sent by the portable device 100. In a process in which the user makes the specific gesture by using the portable device 100, there is relative movement between the portable device 100 and the target device, and frequencies of ultrasonic signals received by the remote devices 200 changes, that is, Doppler frequency shifts occur. The remote device 200 having a specific Doppler frequency shift amount may be determined as the target device.

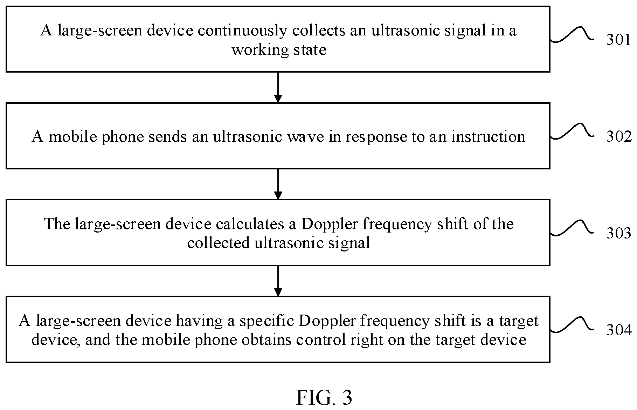

FIG. 3 is a flowchart of selecting a target device among a plurality of devices in a related technology. Based on the scenario shown in FIG. 2, with reference to a procedure shown in FIG. 3, when screens of the first large-screen device and the second large-screen device are in a working state, microphones of both the first large-screen device and the second large-screen device continuously collect an audio signal, to receive an ultrasonic signal when the mobile phone sends the ultrasonic signal. If the user wants to use the mobile phone to control the target device in the first large-screen device and the second large-screen device, for example, use the mobile phone to perform projection to the target device, the user may send a corresponding instruction to the mobile phone to control the mobile phone to continuously send an ultrasonic wave. The user operates the mobile phone to make the specific gesture toward the target device. After collecting the ultrasonic signal sent by the mobile phone, the first large-screen device and the second large-screen device analyze the ultrasonic signal, and calculate Doppler frequency shift amounts in a process in which the large-screen devices receive the ultrasonic signal. The mobile phone obtains the Doppler frequency shift amounts obtained by the first large-screen device and the second large-screen device through calculation, and then the mobile phone determines a large-screen device with a specific Doppler frequency shift amount as the target device. In a possible implementation example, the mobile phone further obtains control right on the target device.

In the related technical solution shown in FIG. 3, when the device screens of the first large-screen device and the second large-screen device are in the working state, the microphones of the first large-screen device and the second large-screen device continuously collect the audio signal. Consequently, power consumption of the large-screen devices is increased, and an operation of continuously collecting the audio signal also brings a potential risk of user privacy leakage.

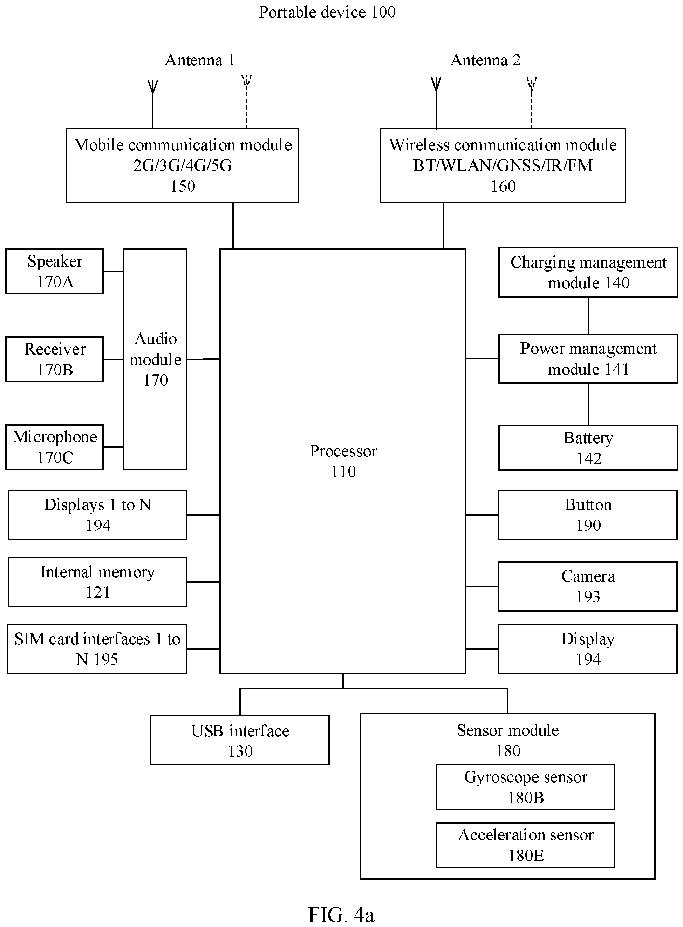

FIG. 4a is a diagram of a hardware structure of a portable device according to an embodiment of this application. Refer to FIG. 4a. The portable device 100 may include a processor 110, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a sensor module 180, a button 190, a camera 193, a display 194, a subscriber identity module (subscriber identity module, SIM) card interface 195, and the like. The sensor module 180 may include a gyroscope sensor 180B, an acceleration sensor 180E, and the like.

It may be understood that the structure shown in this embodiment of this application does not constitute a specific limitation on the portable device 100. In some other embodiments of this application, the portable device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (derial clock line, SCL). In some embodiments, the processor 110 may include a plurality of groups of I2C buses.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may alternatively transmit the audio signal to the wireless communication module 160 through the PCM interface, to implement the function of answering the call through the Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music through the Bluetooth headset.

An MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the portable device 100. The processor 110 communicates with the display 194 through the DSI, to implement a display function of the portable device 100.

The GPIO interface can be configured by using software. The GPIO interface can be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the portable device 100, or may be configured to transmit data between the portable device 100 and a peripheral device, or may be configured to connect to a headset, to play an audio through the headset. The interface may be further configured to connect to another electronic device like an AR device.

It may be understood that an interface connection relationship between the modules shown in this embodiment of this application is merely an example for description, and does not constitute a limitation on the structure of the portable device 100. In some other embodiments of this application, the portable device 100 may alternatively use an interface connection manner different from that in the foregoing embodiment, or use a combination of a plurality of interface connection manners.

The charging management module 140 is configured to receive a charging input from a charger. The charger may be a wireless charger, or may be a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the portable device 100. The charging management module 140 supplies power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the portable device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the portable device 100 may be configured to cover one or more communication frequency bands. Different antennas may also be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the portable device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the portable device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the portable device 100 are coupled, and the antenna 2 and the wireless communication module 160 in the portable device 100 are coupled, so that the portable device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The portable device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light emitting diode, QLED), or the like. In some embodiments, the portable device 100 may include one or N displays 194, where N is a positive integer greater than 1.

The portable device 100 may implement a photographing function through the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV In some embodiments, the portable device 100 may include one or N cameras 193, where N is a positive integer greater than 1.

The digital signal processor is configured to process a digital signal, and may process another digital signal in addition to the digital image signal. For example, when the portable device 100 selects a frequency, the digital signal processor is configured to perform Fourier transform or the like on frequency energy.

The video codec is configured to compress or decompress a digital video. The portable device 100 may support one or more video codecs. In this way, the portable device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transmission mode between human brain neurons, and may further continuously perform self-learning. Applications such as intelligent cognition of the portable device 100 may be implemented through the NPU, for example, image recognition, facial recognition, speech recognition, and text understanding.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the portable device 100, and the like. In addition, the internal memory 121 may include a high-speed random access memory, or may include a nonvolatile memory, for example, at least one magnetic disk storage device, a flash storage device, or a universal flash storage (universal flash storage, UFS). The processor 110 runs instructions stored in the internal memory 121 and/or instructions stored in a memory disposed in the processor, to perform various function applications of the portable device 100 and data processing.

The portable device 100 may implement audio functions such as music playing and recording by using the audio module 170, the speaker 170A, the receiver 170B, the microphone 170C, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The portable device 100 may be used to listen to music or answer a call in a hands-free mode over the speaker 170A.

The receiver 170B, also referred to as an "earpiece", is configured to convert an audio electrical signal into a sound signal. When a call is answered or a voice message is received through the portable device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the portable device 100. In some other embodiments, two microphones 170C may be disposed in the portable device 100, to collect a sound signal and implement a noise reduction function. In some other embodiments, three, four, or more microphones 170C may alternatively be disposed in the portable device 100, to collect a sound signal, implement noise reduction, and identify a sound source, to implement a directional recording function and the like.

The gyroscope sensor 180B may be configured to determine a moving posture of the portable device 100. In some embodiments, angular velocities of the portable device 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects an angle at which the portable device 100 jitters, obtains, through calculation based on the angle, a distance for which a lens module needs to compensate, and allows the lens to cancel the jitter of the portable device 100 through reverse motion, to implement image stabilization. The gyroscope sensor 180B may be further used in a navigation scenario and a motion-sensing game scenario.

The acceleration sensor 180E may detect accelerations in various directions (usually on three axes) of the portable device 100. When the portable device 100 is still, a magnitude and a direction of gravity may be detected. The acceleration sensor 180E may be further configured to identify a posture of the electronic device, and is used in an application such as switching between a landscape mode and a portrait mode or a pedometer.

The button 190 includes a power button, a volume button, and the like. The button 190 may be a mechanical button, or may be a touch button. The portable device 100 may receive a button input, and generate a button signal input related to user setting and function control of the portable device 100.

The SIM card interface 195 is configured to connect to a SIM card. The SIM card may be inserted into the SIM card interface 195 or removed from the SIM card interface 195, to implement contact with or separation from the portable device 100. The portable device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may be further compatible with an external memory card. The portable device 100 interacts with a network through the SIM card, to implement functions such as calling and data communication. In some embodiments, the portable device 100 uses an eSIM, that is, an embedded SIM card. The eSIM card may be embedded into the portable device 100, and cannot be separated from the portable device 100.

A software system of the portable device 100 may use a layered architecture, an event-driven architecture, a microkernel architecture, a micro service architecture, or a cloud architecture. In embodiments of this application, an Android system with a layered architecture is used as an example to describe a software structure of the portable device 100.

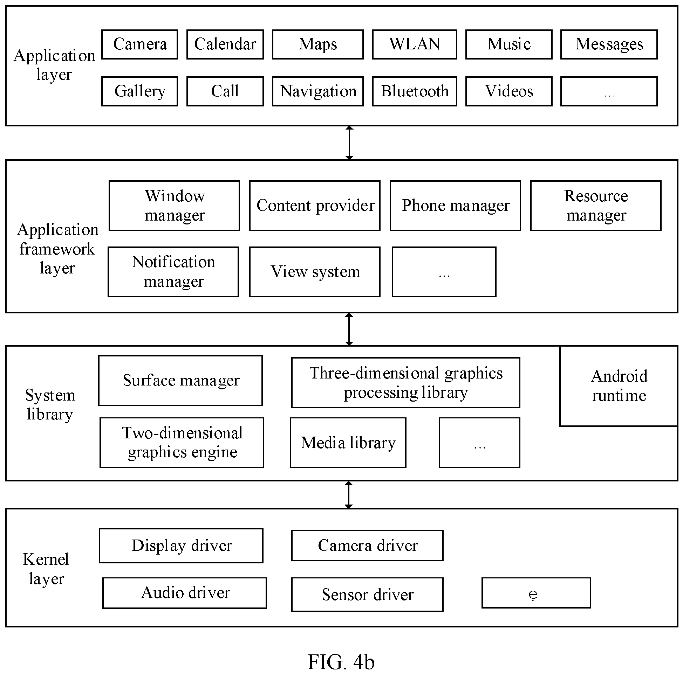

FIG. 4b is a block diagram of a software structure of the portable device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4b, the application packages may include applications such as Camera, Gallery, Calendar, Call, Maps, Navigation, WLAN, Bluetooth, Music, Videos, and Messages.

The application framework layer provides an application programming interface (application programming interface, API) and a programming framework for applications at the application layer. The application framework layer includes some predefined functions.

As shown in FIG. 4b, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history, a bookmark, an address book, and the like.

The view system includes visual controls like a control for displaying a text and a control for displaying an image. The view system may be configured to construct an application. A display interface may include one or more views. For example, a display interface including a notification icon of Messages may include a text display view and an image display view.

The phone manager is configured to provide a communication function for the portable device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of a system in a form of graph or scroll bar text, for example, a notification of an application that is run in the background, or may be a notification that appears on a screen in a form of dialog window. For example, text information is displayed in the status bar, an alert tone is given, the electronic device vibrates, or an indicator light blinks.

The Android runtime includes a core library and a virtual machine. The Android runtime is responsible for scheduling and management of the Android system.

The core library includes two parts: a function that needs to be called in a Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the portable device 100 with reference to a photographing scenario.

A corresponding hardware interrupt is sent to the kernel layer based on a touch operation. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, so that the camera application is started. Then, a camera driver is started by invoking the kernel layer, and a static image or a video is captured through the camera 193.

The portable device 100 provided in embodiments of this application includes but is not limited to a mobile phone.

Based on the hardware structure of the portable device 100 shown in FIG. 4a, corresponding hardware (physical units) may be applied to the technical solutions of this application by performing the following corresponding operations:

In an implementation, the portable device 100 may monitor a gesture of a user based on an acceleration collected by the acceleration sensor 180E and an angular velocity collected by the gyroscope sensor 180B. For example, when the acceleration collected by the acceleration sensor 180E of the portable device 100 is greater than a first threshold, and the angular velocity collected by the gyroscope sensor 180B of the portable device 100 is greater than a second threshold, the portable device 100 determines that the user performs an operation of a specific gesture.

In an implementable implementation, the speaker 170A of the portable device 100 may send an audio signal, for example, may send an ultrasonic signal. The microphone 170C of the portable device 100 may collect an audio signal, for example, may collect a voice instruction of the user, or may collect audio signals sent by remote devices 200.

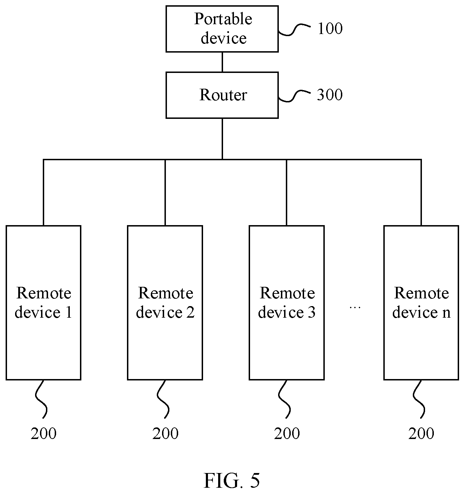

In an implementable implementation, that the portable device 100 establishes wireless communication connections to the remote devices 200 may specifically be that the portable device 100 establishes near field communication connections to the remote devices 200, where the near field communication connection may include an NFC communication connection, a Bluetooth communication connection, or a Wi-Fi communication connection. FIG. 5 is a diagram of connections between a portable device and remote devices according to an embodiment of this application. For example, refer to FIG. 5. The portable device 100 may access a home gateway by using the wireless communication module 160. For example, the home gateway may be a router 300 shown in FIG. 5, and the portable device 100 may connect, by using the wireless communication module 160, to a Wi-Fi hotspot provided by the router 300, to access a Wi-Fi network. The remote devices 200 and the portable device 100 access the same Wi-Fi network, and the portable device 100 may construct a distributed scenario with a plurality of remote devices 200, to implement quick interaction between the devices.

In embodiments of this application, the portable device 100 may discover currently controllable remote devices 200a (referred to as controllable devices 200a in the following) in the distributed scenario. For example, the portable device 100 may be a mobile phone, a tablet computer, a smartwatch, an augmented reality (Augmented Reality, AR) device, a virtual reality (Virtual Reality, VR) device, or the like of the user, or the portable device 100 may be an electronic device of another type or structure. This is not limited in this application. In one aspect, the remote device 200 may be a smart home device, and may specifically include devices such as an alarm, a surveillance camera, and an intelligent lock that are used for security protection, devices such as a smart desk lamp and a smart ceiling light that are used for lighting, devices such as a television and a speaker that are used for entertainment, devices such as dishwasher and an oven that are used for kitchen appliances, devices such as an electric curtain used for home decoration, or devices such as a floor sweeping robot and a washing machine that are used for cleaning. In another embodiment, there may be other smart home devices, which are not listed one by one herein. In addition, the remote device 200 may alternatively be a smart office device, and may specifically include devices such as a large-screen device, a printer, and a projector. The currently controllable remote device 200a is a remote device 200 having at least an audio collection function or an audio sound generation function.

In an implementable implementation, the processor 110 of the portable device 100 may send a recording request message or a sound generation request message to the controllable devices 200a at a first specified occasion through the wireless communication connections to the remote devices 200. The portable device 100 and the remote device 200 may pre-agree on which device is a sound generation device. The first specified occasion may be an occasion at which the portable device 100 detects that a user performs a specific action by using the portable device 100, for example, the user performs a start action of a specific gesture by using a mobile phone.

In an implementation, it may be pre-agreed that the portable device 100 is a sound generation device, and the remote device 200 is a sound receive device. In this case, the processor 110 of the portable device 100 may control, at the first specified occasion, the speaker 170A of the portable device 100 to send an audio signal. In addition, the processor 110 of the portable device 100 may send the recording request message to the controllable devices 200a at the first specified occasion through the wireless communication connections to the remote devices 200, and the controllable device 200a performs, based on the recording request message, recording by using a microphone of the controllable device 200a, to collect the audio signal sent by the portable device 100.

In another implementation, it may be pre-agreed that the remote device 200 is a sound generation device, and the portable device 100 is a sound receive device. In this case, the processor 110 of the portable device 100 may control, at the first specified occasion, the microphone 170C of the portable device 100 to start to collect an audio signal. In addition, the processor 110 of the portable device 100 may send a sound generation request message to the controllable devices 200a at the first specified occasion through the wireless communication connections to the remote devices 200, and the controllable device 200a sends, based on the sound generation request message, an audio signal by using a speaker of the controllable device 200a.

The processor 110 of the portable device 100 may send a recording stop request message or a sound generation stop request message to the controllable devices 200a at a second specified occasion through the wireless communication connections to the remote devices 200. The second specified occasion may be a period of time after the portable device 100 detects that the user performs a corresponding action by using the portable device 100, for example, after the user makes a specific gesture by using the mobile phone, or after the user completes the specific gesture by using the mobile phone, where the period of time includes but is not limited to 200 ms.

The processor 110 of the portable device 100 may analyze, according to a specified algorithm, audio signals collected by the microphone of the portable device 100, calculate corresponding Doppler frequency shift amounts, and determine, based on the calculated Doppler frequency shift amounts, a target device selected by the user, where the target device is a device having a specific Doppler frequency shift amount in the controllable devices 200a.

In some embodiments, the processor 110 of the portable device 100 may further obtain an audio signal collected by the controllable device 200a, and analyze the audio signal according to a specified algorithm. For example, the controllable device 200a may store the collected audio signal in a distributed database, and the portable device 100 may read, from the distributed database, audio data stored by the controllable device 200a, and analyze the audio signal according to the specified algorithm.

In an implementable implementation, the wireless communication module 160 of the portable device 100 may perform a step of identifying the controllable device 200a after the display 194 of the portable device 100 is woken up. For example, after the display 194 (in response to a touch action of the user on a screen or in response to a press operation of the user on a power button) is turned on, the wireless communication module 160 of the portable device 100 may screen out the controllable remote device 200 in the distributed scenario. An occasion for triggering the wireless communication module 160 to perform the step of identifying the controllable device 200a includes but is not limited to the foregoing case. For example, the controllable device 200a may be determined after the portable device 100 is unlocked (in a manner of fingerprint unlocking, password unlocking, face recognition unlocking, or the like).

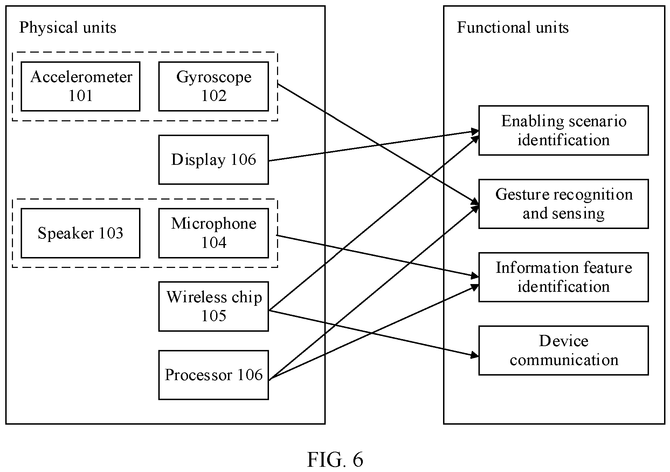

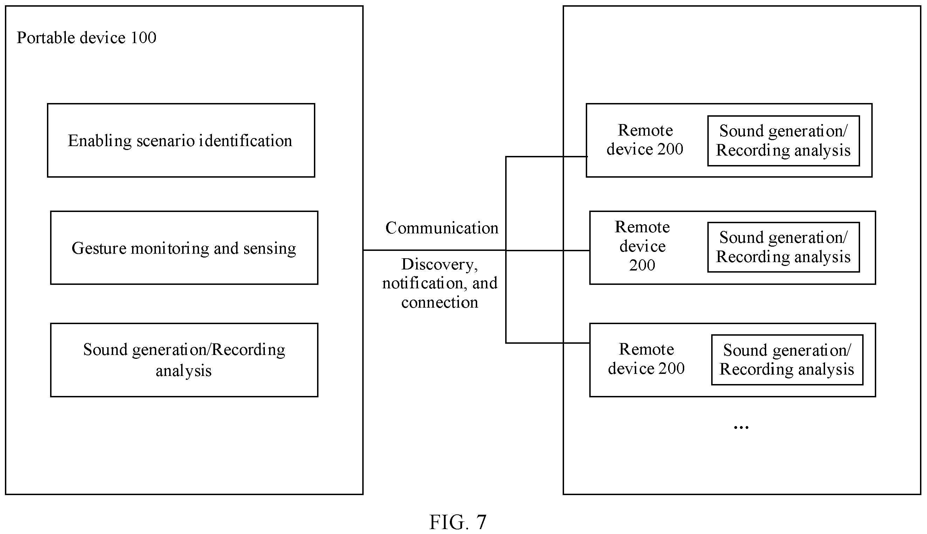

FIG. 6 is a diagram of function association of hardware of a portable device according to an embodiment of this application. FIG. 7 is a diagram of functions of a portable device and a remote device according to an embodiment of this application. With reference to FIG. 6 and FIG. 7, the display 194 and the processor 110 of the portable device 100 may cooperate with each other to implement a scenario identification function. Specifically, after the display 194 is turned on, the wireless communication module 160 of the portable device 100 may screen out the controllable remote device 200 in a distributed scenario.

With reference to FIG. 6 and FIG. 7, the wireless communication module 160 of the portable device 100 may be used for interaction between the portable device 100 and the controllable devices 200a, or used by the portable device 100 to control a target device in the controllable devices 200a, that is, implement a device communication function.

Refer to FIG. 6. The acceleration sensor 180E, the gyroscope sensor 180B, and the processor 110 of the portable device 100 may cooperate with each other to implement a gesture recognition and sensing function. Specifically, the processor 110 may obtain acceleration information collected by the acceleration sensor 180E and angular velocity information collected by the gyroscope sensor 180B. The processor 110 recognizes, by analyzing the obtained acceleration information and the obtained angular velocity information of the portable device 100, a gesture made by the user. For example, when the processor 110 of the portable device 100 determines, through analysis, that an acceleration collected by the acceleration sensor 180E is greater than a first threshold, and that an angular velocity collected by the gyroscope sensor 180B of the portable device 100 is greater than a second threshold, it may be determined that the user performs an operation of a specific gesture. In another example, the processor 110 of the portable device 100 may obtain an acceleration collected by the acceleration sensor 180E and an angular velocity collected by the gyroscope sensor 180B for analysis, and if it is determined, based on an analysis result, that data features of the acceleration and the angular velocity meet data features of a specific gesture, it is determined that the user performs an operation of a specific gesture. The data feature may be a waveform formed by a data change track. A specific step of recognizing the operation of the specific gesture is specifically described in subsequent descriptions.

With reference to FIG. 6 and FIG. 7, the speaker 170A, the microphone 170C, and the processor 110 of the portable device 100 may cooperate with each other to implement a signal feature identification function. For example, in a scenario in which the user moves the portable device 100 to make a specific gesture to select a target device, the speaker 170A of the portable device 100 may send an audio signal (an ultrasonic signal) at a specific frequency, and movement of the portable device 100 relative to the controllable device 200a causes a Doppler frequency shift. A microphone of the controllable device 200a may collect the audio signal sent by the portable device 100, and the portable device 100 may obtain an audio signal collected by each controllable device 200a. The processor 110 of the portable device 100 may calculate a Doppler frequency shift amount of each audio signal based on an audio signal processing technology, screen out, based on Doppler frequency shift amounts corresponding to a plurality of audio signals, a controllable device 200a having a specific Doppler frequency shift amount, and then select the controllable device 200a having the specific Doppler frequency shift amount as the target device. A method for determining the target device based on the Doppler frequency shift amounts of the audio signals collected by the controllable devices 200a is specifically described in subsequent descriptions.

In another implementation, in a scenario in which the user moves the portable device 100 to make a specific gesture to select a target device, microphones of a plurality of controllable devices 200a may send audio signals (ultrasonic signals) of specific frequencies, and movement of the portable device 100 relative to the controllable device 200a causes a Doppler frequency shift. The microphone 170C of the portable device 100 may collect the audio signals sent by the plurality of controllable devices 200a. The processor 110 of the portable device 100 may calculate a Doppler frequency shift amount of each audio signal based on the audio signal processing technology, screen out, based on Doppler frequency shift amounts corresponding to a plurality of audio signals, a controllable device 200a having a specific Doppler frequency shift amount, and then select the controllable device 200a having the specific Doppler frequency shift amount as the target device.

With reference to FIG. 6 and FIG. 7, the remote device 200 also has a recording analysis function. In some embodiments, after collecting the audio signal sent by the speaker 170A of the portable device 100, the remote device 200 may calculate, based on the audio signal processing technology, a Doppler frequency shift amount of the collected audio signal, and store, in a distributed database, the Doppler frequency shift amount obtained through calculation. The portable device 100 may obtain a Doppler frequency shift amount stored by each controllable device 200a in the distributed database, screen out, based on Doppler frequency shift amounts corresponding to a plurality of audio signals, a controllable device 200a having a specific Doppler frequency shift amount, and then select the controllable device 200a having the specific Doppler frequency shift amount as the target device.

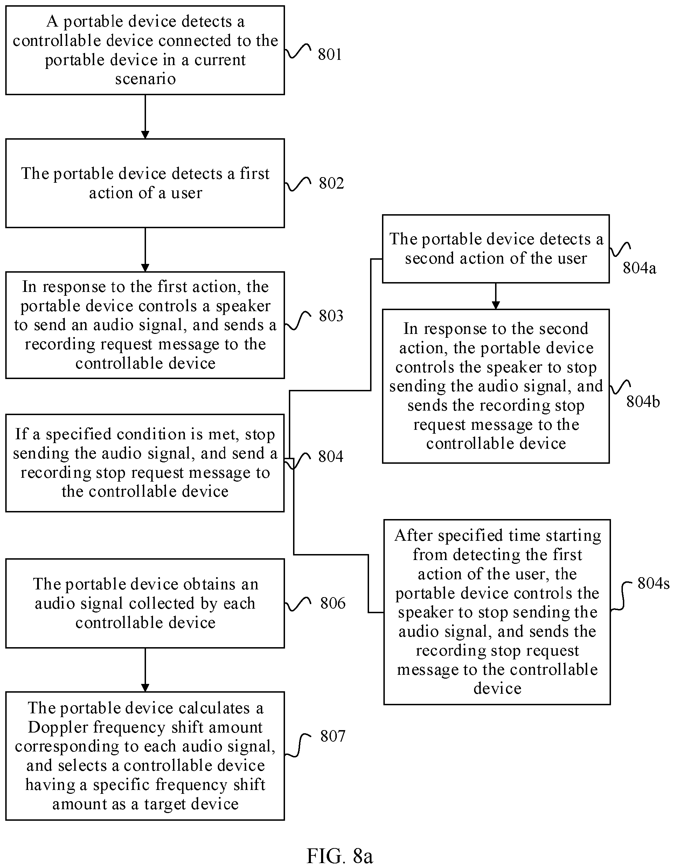

FIG. 8a is a flowchart of an identification method for target device selection according to an embodiment of this application. Based on the portable device 100 with the structure shown in FIG. 5 and with reference to the procedure shown in FIG. 8a, the following describes in detail an identification method for target device selection provided in embodiments of this application. As shown in FIG. 8a, the method may include the following steps.

Step 801: The portable device 100 discovers and detects a controllable device 200a connected to the portable device 100 in a current scenario.

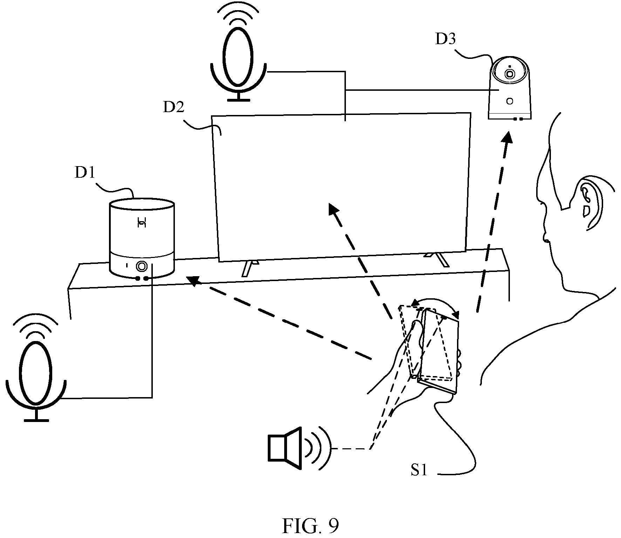

In the technical solution of this application, to reduce device power consumption, the user may control, by using the portable device 100, the controllable device 200a in the scenario to collect an audio signal in a specific time period. Further, before a step in which the controllable device 200a collects the audio signal in the specific time period is performed, the portable device 100 may detect, in advance, the controllable device 200a connected to the portable device 100 in the current scenario. For example, the portable device 100 may construct a distributed scenario with a plurality of remote devices 200, and the portable device 100 may discover the controllable device 200a in the scenario by using a device discovery feature of the distributed scenario. FIG. 9 is a diagram of a specific application scenario according to an embodiment of this application. The portable device 100 may be a mobile phone S1 shown in FIG. 9. The mobile phone S1 constructs a distributed scenario with a sound box D1, a television D2, a surveillance camera D3, and a smart ceiling light (not shown in the figure). The sound box D1, the television D2, and the surveillance camera D3 all have an audio collection function, an audio sound generation function, and an audio signal analysis function. The audio signal analysis function is at least a function of calculating a Doppler frequency shift amount of an audio signal. However, the smart ceiling light does not have an audio collection function or an audio sound generation function. The mobile phone S1 may determine, based on the device discovery feature of the distributed scenario, that the smart ceiling light does not have the audio collection function or the audio sound generation function in the devices discovered by the mobile phone S1, and may further determine that the smart ceiling light is not the controllable device 200a. Based on a same principle, the mobile phone S1 may discover controllable devices: the sound box D1, the television D2, and the surveillance camera D3.

Step 802: The portable device 100 detects a first action of a user.

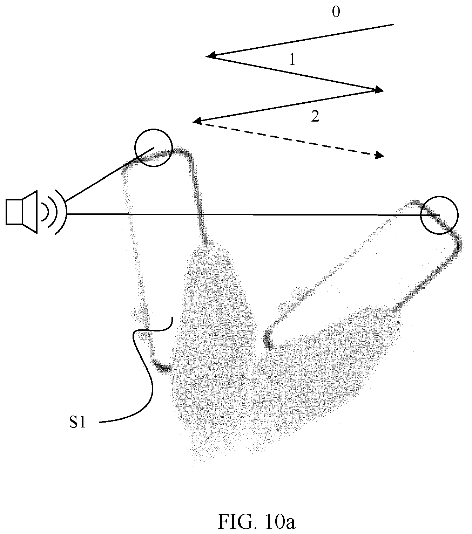

To select a target device by using non-touch natural interaction behavior, the user may operate the portable device 100 to make a specific gesture toward the target device, so that relative movement occurs between the portable device 100 and the target device. FIG. 10a is a diagram of a specific gesture according to an embodiment of this application. For example, with reference to FIG. 9 and FIG. 10a, the user may use the mobile phone S1 to make a specific gesture toward the target device.

The specific gesture may be a "make a wave" gesture. The "make a wave" gesture is specifically that the user uses the mobile phone S1 to wave forward and backward toward the target device, so that relative movement occurs between the mobile phone S1 and the target device. As shown in FIG. 10a, the "make a wave" gesture includes at least an action "0", an action "1", and an action "2". A microphone of the mobile phone S1 is disposed on the top of the mobile phone. When the user moves the mobile phone S1 to perform the action "0", the microphone of the mobile phone S1 moves away from the target device. When the user moves the mobile phone S1 to perform the action "1", the microphone of the mobile phone S1 moves close to the target device. When the user moves the mobile phone S1 to perform the action "2", the microphone of the mobile phone S1 moves away from the target device again.

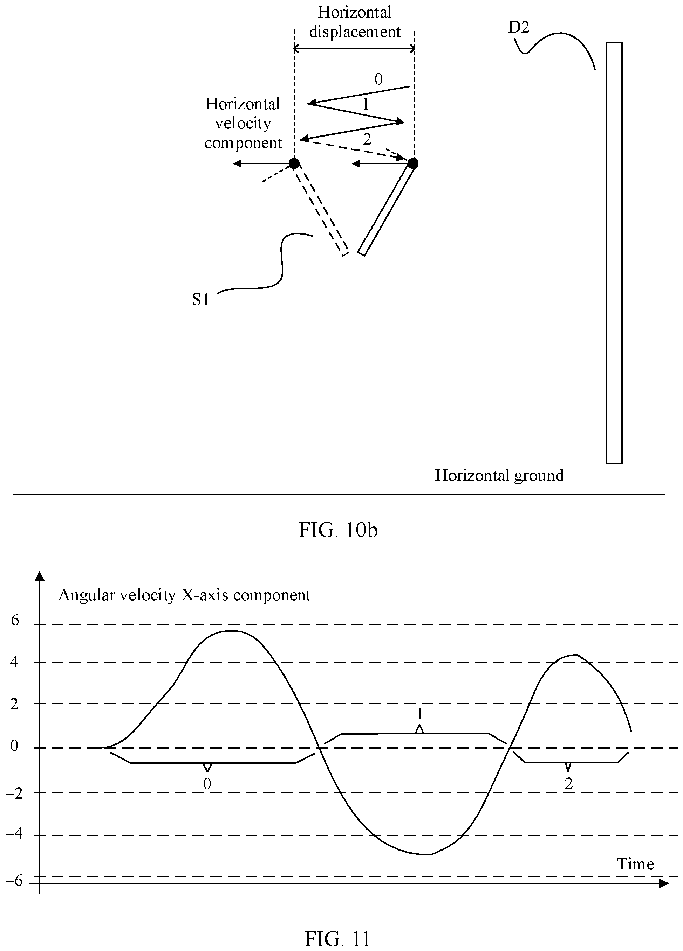

When the portable device 100 performs step 802, that is, the portable device 100 detects the first action of the user, the first action may be the action "0" shown in FIG. 10. FIG. 10b is a diagram of a horizontal velocity component brought by the specific gesture according to an embodiment of this application. Refer to FIG. 10b. In a process in which the user makes the "make a wave" gesture, as the user sequentially performs the action "0", the action "1", and the action "2", a tangential horizontal velocity brought by moving the mobile phone S1 by the user causes horizontal displacement of the mobile phone S1 relative to the target device (the television D2). A direction of the horizontal displacement includes a direction that is close to the television D2 or a direction that is away from the television D2. The processor 110 of the portable device 100 may determine, based on acceleration information detected by the acceleration sensor 180E of the portable device 100 and angular velocity information detected by the gyroscope sensor 180B of the portable device 100, whether the user operates the portable device 100 to perform the first action. For example, when the processor 110 of the portable device 100 determines, through analysis, that an acceleration collected by the acceleration sensor 180E is greater than a first threshold, and an angular velocity collected by the gyroscope sensor 180B of the portable device 100 is greater than a second threshold, it may be determined that the user performs the first action by using the portable device 100. FIG. 11 is a diagram of monitoring data of an acceleration and an angular velocity of a portable device according to an embodiment of this application. As shown in FIG. 11, it may be determined, based on the acceleration collected by the acceleration sensor 180E and the angular velocity collected by the gyroscope sensor 180B, that it is detected at a location "0" shown in FIG. 11 that the user performs the action "0" (namely, the first action) shown in FIG. 10 by using the portable device 100, that it is detected at a location "1" that the user performs the action "1" shown in FIG. 10 by using the portable device 100, and that it is detected at a location "2" shown in FIG. 11 that the user performs the action "2" shown in FIG. 10 by using the portable device 100.

Step 803: In response to the first action, the portable device 100 controls the speaker 170A to send an audio signal, and sends a recording request message to the controllable device 200a.

After detecting that the user performs the first action, in response to the first action, the portable device 100 controls the speaker 170A of the portable device 100 to send the audio signal, and sends the recording request message to the controllable device 200a, to request the controllable device 200a to perform an audio collection operation.

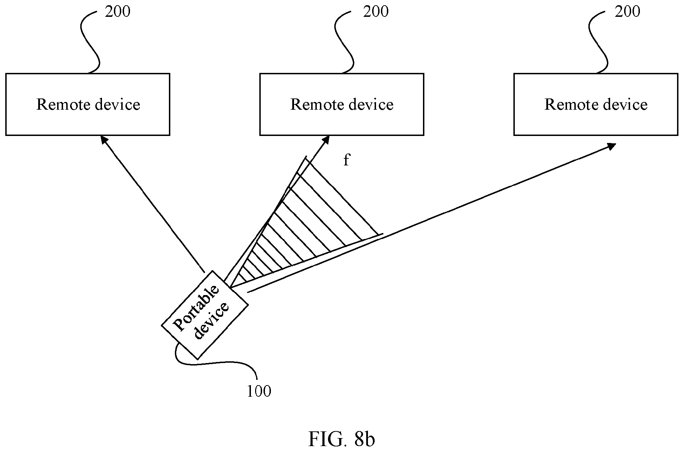

In response to the first action, the portable device 100 needs to perform step 803a. Step 803a includes: The portable device 100 controls the speaker 170A to continuously play the audio signal at a specific frequency. To avoid interfering with another person, a high-frequency sound wave signal that cannot be heard by a human ear may be used, for example, an ultrasonic signal. Based on some experiments, the human ear cannot hear a sound whose frequency is higher than 17 kHz. Refer to FIG. 8b. In an implementation, the portable device 100 controls the speaker 170A to continuously play the audio signal at the specific frequency. Specifically, the speaker 170A of the portable device 100 may be controlled to send a high-frequency sound wave signal (an ultrasonic signal) of 20 kHz. A sound source of this frequency band has strong adaptability, can be received by most devices, and does not cause noise pollution or affect a current environment. A frequency of the audio signal is not specifically limited in embodiments of this application. An agreed frequency for the high-frequency sound wave signal may be selected within a specific range. For example, a fixed frequency within a range of 17 kHz to 20 kHz is used as the agreed frequency for sending the audio signal.

It should be noted that, to avoid interference caused by another sound source in an application scenario to collection work of the controllable device 200a, the portable device 100 and each controllable device 200 may pre-agree on a frequency for sending the audio signal, so that the controllable device 200 may perform targeted collection when collecting the audio signal. Specifically, the controllable device 200a may filter the collected audio signal, to collect the high-frequency sound wave signal sent by the portable device in a targeted manner.

In response to the first action, the portable device 100 needs to perform step 803b. Step 803b includes: The portable device 100 sends a recording request message to the discovered controllable device 200a.

In an implementation, in response to the first action, the portable device 100 may simultaneously perform step 803a and step 803b. In other words, the two steps in which the portable device 100 controls the speaker 170A to continuously play the audio signal at the specific frequency, and sends the recording request message to the discovered controllable device 200a may be performed simultaneously.

In another implementation, in response to the first action, the portable device 100 may first perform either of step 803a and step 803b, and then perform another remaining step. In other words, the portable device 100 may first control the speaker 170A to continuously play the audio signal at the specific frequency or the portable device 100 first sends the recording request message to the discovered controllable device 200a, and performs another step after specific time.

It should be noted that a time length of the specific time does not affect at least the audio signal that is continuously played by the speaker 170A of the portable device 100 in the process in which the user performs the action "1" and the action "2" and that is collected by the controllable device 200a. In other words, the controllable device 200a receives, at least before the user performs the action "1", the recording request message sent by the portable device, and starts recording. For example, in response to the first action, the portable device 100 first sends the recording request message to the discovered controllable device 200a, and the controllable device 200a starts recording after receiving the recording request information. After 50 ms since the portable device 100 first sends the recording request message to the discovered controllable device 200a, the portable device 100 controls the speaker 170A to continuously play the high-frequency sound wave signal of 20 kHz, and the controllable device 200a collects, by using a microphone of the controllable device 200a, the high-frequency sound wave signal sent by the portable device 100.

Step 804: If a specified condition is met, stop sending the audio signal, and send a recording stop request message to the controllable device.

In an implementation, step 804 may include step 804a and step 804b. Details are as follows.

Step 804a: The portable device 100 detects a second action of the user.

The second action includes at least the action "0" (namely, the first action), the action "1", and the action "2" that are sequentially and continuously performed as shown in FIG. 10. The specific gesture (for example, the "make a wave" gesture) includes the second action, or the specific gesture is the second action.

The processor 110 of the portable device 100 may determine, based on the acceleration information detected by the acceleration sensor 180E of the portable device 100 and the angular velocity information detected by the gyroscope sensor 180B of the portable device 100, whether the user operates the portable device 100 to perform the second action. For example, the second action is to sequentially and continuously perform the action "0", the action "1", and the action "2". The processor 110 of the portable device 100 may determine, based on the acceleration information detected by the acceleration sensor 180E of the portable device 100 and the angular velocity information detected by the gyroscope sensor 180B of the portable device 100, that the user operates the portable device 100 to sequentially and continuously perform the action "0", the action "1", and the action "2", to determine that the user performs the second action.

Step 804b: In response to the second action, the portable device 100 controls the speaker 170A to stop sending the audio signal, and sends the recording stop request message to the controllable device 200a.

After detecting that the user performs the second action, in response to the second action, the portable device 100 controls the speaker 170A of the portable device 100 to stop sending the audio signal, and sends the recording stop request message to the controllable device 200a, to request the controllable device 200a to end the audio collection operation. Further, the controllable device 200a may store the collected audio signal in a corresponding memory, for example, in a distributed database.

In another implementation, step 804 includes step 804s. Details are as follows.

Step 804s: After specified time starting from detecting the first action of the user, the portable device 100 controls the speaker 170A to stop sending the audio signal, and sends the recording stop request message to the controllable device 200a. The specified time is estimated or collected time required by the user to complete the specific gesture.

For example, preset duration may be set in the portable device 100 before delivery as the estimated time required by the user to complete the specific gesture. A manner of selecting the duration may be making the specific gesture by a plurality of experimenters, and time spent by each experimenter in making the specific gesture is collected. Further, duration of the specified time may be determined based on the collected time. A determining manner includes but is not limited to: using an average value of a plurality of pieces of collected duration as the duration of the specified time period, or using a largest value in the plurality of pieces of collected duration as the duration of the specified time period.

In another example, the portable device 100 may guide the user to make a specific gesture (for example, the "make a wave" gesture) in a phase in which the user uses the portable device 100 (for example, in a process in which the user activates the portable device 100 or when the user enables a function of selecting a target device by using a gesture). In addition, time required by the user to complete the specific gesture is collected, and the collected time used by the user is used as the specified time period.

The portable device 100 starts timing after detecting that the user performs the first action, and controls the speaker 170A of the portable device 100 to stop sending the audio signal, and sends the recording stop request message to the controllable device 200a after the specified time, to request the controllable device 200a to end the audio collection operation. Further, the controllable device 200a may store the collected audio signal in the corresponding memory, for example, in the distributed database.

Step 805: The portable device 100 obtains the audio signal collected by each controllable device 200a.

The portable device 100 may analyze the audio signal collected by the controllable device 200a, to determine the target device selected by the user. The portable device 100 needs to obtain the audio signal collected by each controllable device 200a. In an implementation, after collecting the audio signal, the controllable device 200a may send the audio signal collected this time to the portable device 100 through a wireless communication connection to the portable device.

In another implementation, after collecting the audio signal, the controllable device 200a may store the collected audio signal in the distributed database, and the portable device 100 may read, from the distributed database in response to the second action, the audio signal stored this time in the controllable device 200a. The portable device 100 may determine, based on identification information of the audio signal stored in the controllable device 200a, a target audio signal that needs to be read. For example, the portable device 100 may determine, based on name information and a timestamp of the audio signal, whether the audio signal is the target audio signal that needs to be read this time. Specifically, it may be identified, based on name information of an audio signal stored in a specified storage area in the distributed database, that an audio is an audio that is stored in the controllable device 200a and that is used to analyze the target device selected by the user. On this basis, an audio whose storage timestamp is after time when the second action is detected is further screened out, in this case, the target audio signal that needs to be read this time may be screened out. In some embodiments, audio data that meets a specific condition and that is in a specified storage area in the distributed database may be further periodically deleted. For example, audio data whose storage time reaches 1 minute may be deleted every 1 hour. Expired audio data is periodically deleted, so that workload of screening out the target audio signal that needs to be read can be reduced, and a screening speed can be improved.

Step 806: The portable device 100 calculates a Doppler frequency shift amount corresponding to each audio signal, and selects a controllable device 200a having a specific frequency shift amount as the target device.

The user holds the portable device 100 to make the specific gesture toward the target device. The specific gesture includes moving in a direction toward the target device. The portable device 100 sends, in a process of the specific gesture, the continuously played audio signal at the specific frequency, and the controllable device 200a in the scenario may collect the audio signal at the specific frequency by using the microphone of the controllable device 200a. Due to movement of the specific gesture, a Doppler frequency shift occurs between a frequency of an audio collected by the controllable device 200a and an original frequency of the played audio signal at the specific frequency by the portable device 100. A scenario shown in FIG. 9 is used as an example. With reference to FIG. 10b, the user makes the "make a wave" gesture toward the television D2 by using the mobile phone S1. When the user makes the "make a wave" gesture by using the mobile phone S1, the mobile phone S1 moves, and horizontal tangential displacement of the mobile phone S1 faces the television D2. In addition, in a process in which the user makes the "make a wave" gesture, the mobile phone S1 continuously sends the 20 kHz ultrasonic signal, and the sound box D1, the television D2, and the surveillance camera D3 may all collect, by using microphones, an audio played by the mobile phone S1. Further, a device that the mobile phone faces during the specific gesture may be determined based on Doppler frequency shifts of audios collected by the sound box D1, the television D2, and the surveillance camera D3. In other words, the target device is determined.

In an implementation, after obtaining the audio signal (namely, the target audio signal) collected by the controllable device 200a, the portable device 100 may calculate a Doppler frequency shift amount of each target audio signal based on an audio signal processing technology. In addition, a controllable device 200a having a largest frequency shift amount is selected based on Doppler frequency shift amounts corresponding to a plurality of target audio signals, and then the controllable device 200a having the largest frequency shift amount is selected as the target device.

In a process in which the user makes the specific gesture (for example, the "make a wave" gesture) by using the portable device 100, the portable device 100 continuously sends a high-frequency sound wave signal (for example, the 20 kHz ultrasonic signal) with a constant frequency $f_0$, and the controllable device 200a in the current scenario may collect, by using the microphone of the controllable device 200a, the high-frequency sound wave signal sent by the portable device 100. In an implementation, a frequency $f_A$ of the received high-frequency sound wave signal may be calculated based on Doppler effect by using Formula 1:

$$f_A = \frac{c + v_s}{c + v_a} \bullet f_0 \quad \text{Formula 1}$$

Herein, c indicates a sound speed, $v_s$ indicates a speed of a user gesture, and $v_a$ indicates a speed of the controllable device 200a. Generally, the controllable device 200a is in a static state, that is, $v_a = 0$. In another implementation, the frequency $f_A$ may alternatively be calculated in another calculation manner. This is not limited herein.

When the user makes the specific gesture by using the portable device 100, the user holds the portable device 100 and the portable device 100 is horizontally tangentially displaced toward the target device. Therefore, in comparison with another controllable device 200a in this scenario, a largest Doppler frequency shift amount can be detected at a location of the target device. In this case, frequency shift peaks at locations of the controllable devices 200a may be compared to screen out the controllable device 200a having the largest frequency shift amount, and then the target device selected by the user may be determined. An audio signal collected by the target device has a largest frequency shift amount.

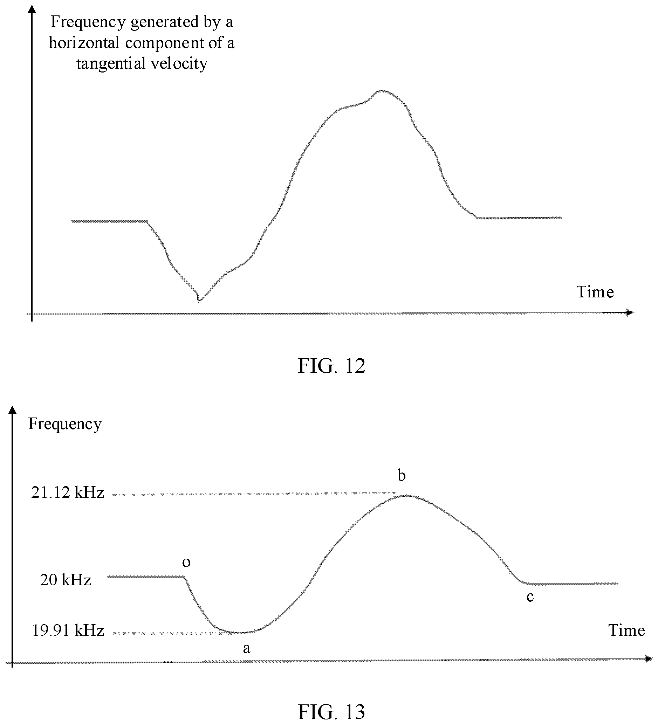

In another implementation, the portable device 100 may alternatively determine, in another manner, the target device selected by the user. For example, after obtaining the audio signal (namely, the target audio signal) collected by the controllable device 200a, the portable device 100 may perform signal feature extraction based on a signal feature extraction technology, and simulate a waveform (a second waveform) graph of a frequency shift change of the collected target audio signal. Further, the portable device 100 may further obtain detection data of the gyroscope sensor 180B of the portable device 100 in the process in which the user makes the specific gesture, and simulate, based on the detection data, a waveform (a first waveform) graph of a frequency change generated by a horizontal component of a tangential velocity of the portable device 100. To determine the target device selected by the user, a waveform graph of a frequency shift change of each target audio signal may be compared with the waveform graph of the frequency change generated by the horizontal component of the tangential velocity of the portable device 100, and a waveform similarity between the two waveform graphs is determined. A controllable device corresponding to a waveform graph that is of a frequency shift change of the target audio signal and that has a highest similarity to the waveform graph of the frequency change generated by the horizontal component of the tangential velocity of the portable device 100 is determined as the target device selected by the user. For example, based on the application scenario shown in FIG. 9, after the user makes the "make a wave" gesture by using the mobile phone S1 toward the target device (the television D2), the sound box D1, the television D2, and the surveillance camera D3 all collect the 20 kHz ultrasonic signal sent by the mobile phone S1. The mobile phone S1 obtains ultrasonic signals collected by the sound box D1, the television D2, and the surveillance camera D3, and analyzes each ultrasonic signal to obtain a waveform graph of a frequency shift change of the audio signal. In another aspect, the mobile phone S1 may simulate, based on the detection data of the gyroscope of the mobile phone S1 in the process in which the user makes the "make a wave" gesture, the waveform graph of the frequency change generated by the horizontal component of the tangential velocity of the mobile phone S1. FIG. 12 is a waveform graph of a frequency change generated by a horizontal component of a tangential velocity of a mobile phone according to an embodiment of this application. The mobile phone S1 may simulate the waveform shown in FIG. 12 based on the detection data of the gyroscope of the mobile phone S1 in a process in which the user makes the "make a wave" gesture. FIG. 13 is a waveform graph of a frequency shift change corresponding to an audio signal collected by a television according to an embodiment of this application. As shown in FIG. 13, a frequency shift change from a point o to a point a corresponds to a frequency shift change of the action "0" shown in FIG. 10. In other words, when the action "0" is performed, the frequency of the 20 kHz ultrasonic signal sent by the mobile phone S1 and collected at a location of the television D2 decreases. In the technical solution of this application, to reduce device power consumption, the mobile phone S1 performs, in response to a first action (for example, the action "0"), operations of sending an audio signal, collecting an audio signal, and analyzing an audio signal. The frequency shift change from the point o to the point a cannot be viewed based on the solution of this application. As shown in FIG. 13, a constant frequency of 20 kHz before the point o and the frequency shift change from the point o to the point a are only used as a frequency shift change track for comparison reference. Based on the technical solution of this application, a frequency shift change status of the audio signal after the point a may be viewed.

A frequency shift change from the point a to a point b corresponds to a frequency shift change of the action "1" shown in FIG. 10. In a process in which the user performs the action "1", the mobile phone S1 approaches the television D2. Based on Doppler effect, a frequency of an ultrasonic signal collected by the television D2 in this process gradually increases, and the frequency gradually increases from 19.91 kHz at the point a and reaches a peak value when the action "1" is completed, that is, reaches 21.21 kHz corresponding to the point b. A frequency shift change from the point b to a point c corresponds to a frequency shift change of the action "2" shown in FIG. 10. In a process in which the user performs the action "2", the mobile phone S1 gradually moves away from the television D2. Based on Doppler effect, a frequency of the ultrasonic signal collected by the television D2 in this process gradually decreases, and the frequency gradually decreases from 21.21 kHz at the point b. After the user completes the "make a wave" gesture, a movement status of the mobile phone S1 relative to the television D2 tends to be stable. The mobile phone S1 remains static relative to the television D2 within a period of time, in this case, the frequency of the ultrasonic signal collected at the television D2 remains stable. It should be noted that, in some embodiments of this application, in response to a second action (for example, the action "2"), operations of sending the audio signal, collecting the audio signal, and analyzing the audio signal are stopped, and a frequency shift change after the point c is used as a frequency shift change track for comparison reference.

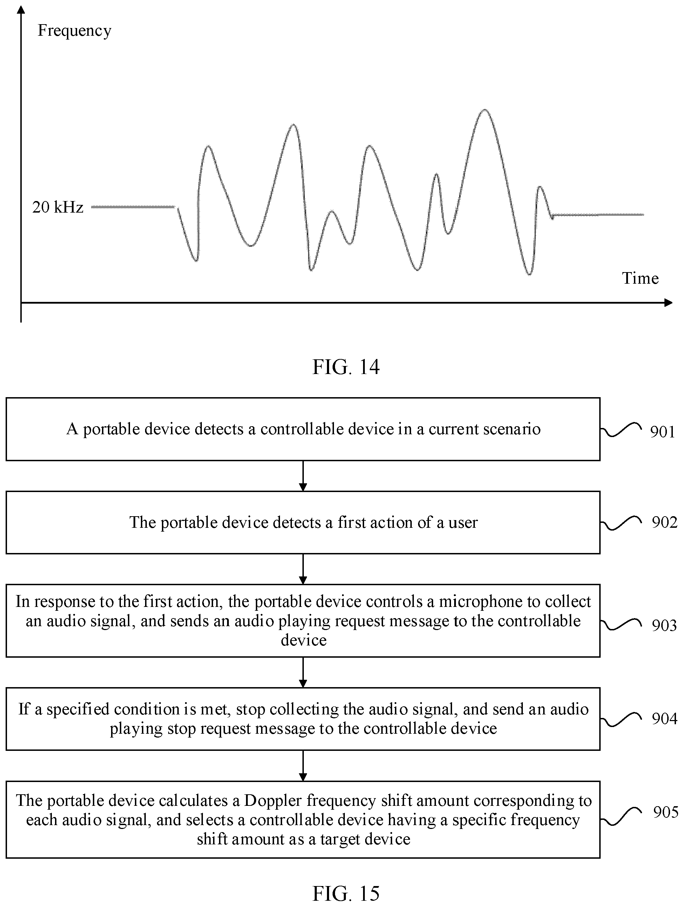

FIG. 14 is a waveform graph of a frequency shift change corresponding to an audio signal collected by a sound box according to an embodiment of this application. As shown in FIG. 14, the ultrasonic signal sent by the mobile phone S1 is collected at the location of the sound box D1, and a frequency shift change of the ultrasonic signal is disorderly. A waveform graph of a frequency shift change corresponding to an audio signal collected by the surveillance camera D3 is not shown. Similar to FIG. 14, only a disorderly signal frequency shift change can be observed.

The mobile phone S1 may determine a similarity between the waveform graph shown in FIG. 13 and the waveform graph shown in FIG. 12, and a similarity between the waveform graph shown in FIG. 14 and the waveform graph shown in FIG. 12. It may be determined, through similarity comparison, that the similarity between the waveform graph shown in FIG. 13 and the waveform graph shown in FIG. 12 is higher than the similarity between the waveform graph shown in FIG. 14 and the waveform graph shown in FIG. 12. Therefore, it may be learned that the target device selected by the user by using the mobile phone S1 is the television D1 corresponding to the waveform graph shown in FIG. 13.

In the foregoing embodiments, the portable device 100 is used as a sound generation end to send the audio signal, and the controllable device 200a is used as a collection end to collect the audio signal sent by the portable device 100. However, a device at the collection end needs to support a function of high-frequency sampling and sound receiving, and an audio sampling frequency needs to be at least greater than 40 kHz. However, some devices cannot support high-frequency sampling and sound receiving due to hardware limitations.

To further resolve the foregoing problem that high-frequency sampling and sound receiving cannot be supported due to the hardware limitations, an embodiment of this application further provides another identification method for target device selection. FIG. 15 is a flowchart of an identification method for target device selection according to another embodiment of this application. Based on the portable device 100 with the structure shown in FIG. 5 and with reference to the procedure shown in FIG. 15, the following describes in detail an identification method for target device selection provided in embodiments of this application. As shown in FIG. 15, the method may include the following steps.

Step 901: The portable device 100 detects a controllable device 200a connected to the portable device 100 in a current scenario.

A specific implementation may be the same as or similar to that of step 801 shown in FIG. 8a. Details are not described herein.

Step 902: The portable device 100 detects a first action of a user.

A specific implementation may be the same as or similar to that of step 802 shown in FIG. 8a. Details are not described herein.

Step 903: In response to the first action, the portable device 100 controls the microphone 170C to collect an audio signal, and sends an audio playing request message to the controllable device 200a.

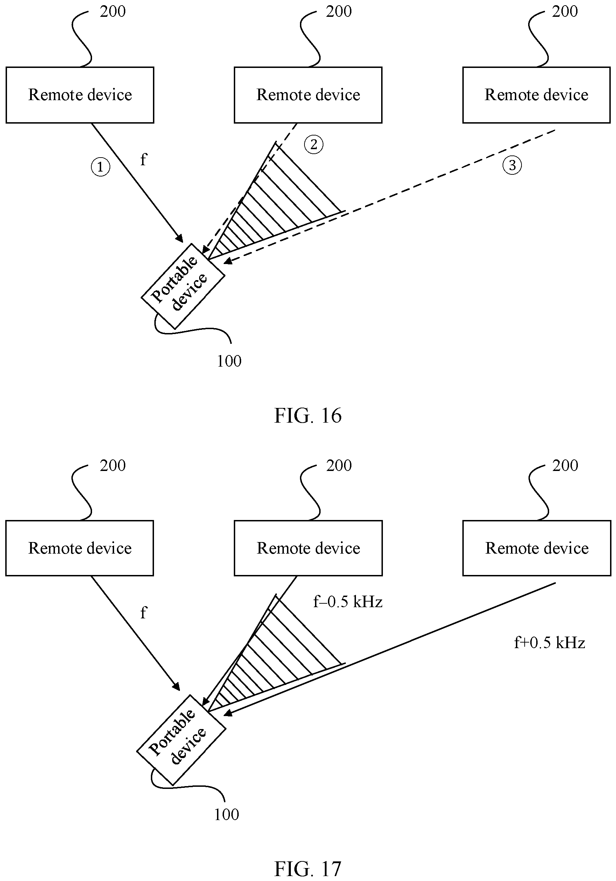

In response to the first action, the portable device 100 needs to perform step 903a. Step 903a includes: The portable device 100 sends the audio playing request message to the controllable device 200a. After receiving the audio playing request message sent by the portable device 100, the control device 200a starts to continuously play an audio signal of a specific frequency. The frequency of the audio signal is not specifically limited in embodiments of this application. For example, an agreed frequency may be selected from a range of 17 kHz to 20 kHz for a high-frequency sound wave signal. Refer to FIG. 16. In an implementation, each controllable device 200a may send a high-frequency sound wave signal (an ultrasonic signal) of a same frequency f (for example, f=20 kHz). A sound source in this frequency band has strong adaptability, and may be received by most devices. In addition, no noise pollution is caused, and a current environment is not affected. In an embodiment in which each controllable device 200a sends a high-frequency sound wave signal of a same frequency, the controllable device 200a needs to send a 20 kHz high-frequency sound wave signal in series. Correspondingly, the portable device 100 needs to receive the 20 kHz high-frequency sound wave signal sent by the controllable device 200a in series. For example, serial sending and serial receiving are performed in a sequence of ①, ②, and ③ shown in FIG. 16. This process is performed until all 20 kHz high-frequency sound wave signals sent by the controllable devices 200a are collected. However, this manner takes long time, affecting user experience. To overcome the foregoing delay problem, each controllable device 200a may send a high-frequency sound wave signal of a different frequency. Refer to FIG. 17. The controllable device 200a may allocate a frequency band based on a specific frequency difference (for example, ±0.5 kHz), and each controllable device 200a and the portable device 100 pre-agree on a frequency for sending the high-frequency sound wave signal by the controllable device 200a. For example, there are three remote devices 200 in the scenario, and the three remote devices 200 are all controllable devices 200a. Frequencies of high-frequency sound wave signals sent by the three controllable devices 200a to the portable device 100 are respectively a frequency f, a frequency f-0.5 kHz, and a frequency f+0.5 kHz. Further, in an audio collection process, the portable device 100 may perform targeted collection based on agreed frequencies (the frequency f, the frequency f-0.5 kHz, and the frequency f+0.5 kHz), to collect the high-frequency sound wave signals sent by the three controllable devices 200a to the portable device 100.

In response to the first action, the portable device 100 needs to perform step 903b. Step 903b includes: The portable device 100 controls the microphone 170C to collect the audio signal.

It should be noted that, to avoid interference caused by another sound source in an application scenario to collection work of the portable device 100, the portable device 100 and each controllable device 200 may pre-agree on a frequency for sending the audio signal, so that the portable device 100 may perform targeted collection when collecting the audio signal. Specifically, the portable device 100 may filter collected audio signals, to collect the high-frequency sound wave signals sent by the controllable devices 200 in a targeted manner.

In an implementation, in response to the first action, the portable device 100 may simultaneously perform step 903a and step 903b. In other words, the two steps in which the portable device 100 controls the microphone 170C to collect the audio signal, and sends the audio playing request message to the controllable device 200a may be simultaneously performed.

In another implementation, in response to the first action, the portable device 100 may first perform either of step 903a and step 903b, and then perform another remaining step. In other words, the portable device 100 may first control the microphone 170C to collect the audio signal or the portable device 100 first sends the audio playing request message to the controllable device 200a, and performs another step after specific time.

It should be noted that a time length of the specific time does not affect at least the audio signal that are continuously played by the controllable device 200a in the process in which the user performs the action "1" and the action "2" and that are collected by the portable device 100. In other words, the controllable device 200a receives, at least before the user performs the action "1", the audio playing request message sent by the portable device 100, and starts playing the corresponding audio signal.

Step 904: If a specified condition is met, stop collecting the audio signal, and send an audio playing stop request message to the controllable device.

In an implementation, step 904 may include step 904a and step 904b. Details are as follows.

Step 904a: The portable device 100 detects a second action of the user.

A specific implementation may be the same as or similar to that of step 804a shown in FIG. 8a. Details are not described herein.

Step 904b: In response to the second action, the portable device 100 controls the microphone 170C to stop collecting the audio signal, and sends the audio playing stop request message to the controllable device 200a.

After detecting that the user performs the second action, in response to the second action, the portable device 100 controls the microphone of the portable device 100 to stop collecting the audio signal, and may further obtain the audio signal sent by each controllable device 200a. In response to the second action, the portable device 100 further sends the audio playing stop request message to the controllable device 200a, so that the controllable device 200a stops playing the audio signal based on the audio playing stop request message. In the foregoing control manner, the portable device 100 and the controllable device 200a can be prevented from continuously sending and collecting the audio signal, so that power consumption of the portable device 100 and the controllable device 200a is reduced.

In another implementation, step 904 includes step 904s. Details are as follows.

Step 904s: After specified time starting from detecting the first action of the user, the portable device 100 controls the microphone 170C to stop collecting the audio signal, and sends the audio playing stop request message to the controllable device 200a. The specified time is estimated or collected time required by the user to complete the specific gesture.

A manner of setting the specified duration is the same as or similar to that described in step 804s. Details are not described herein.

The portable device 100 starts timing after detecting that the user performs the first action, and after the specified time, the microphone 170C stops collecting the audio signal, and sends the audio playing stop request message to the controllable device 200a, to request the controllable device 200a to end an audio playing operation.

Step 905: The portable device 100 calculates a Doppler frequency shift amount corresponding to each audio signal, and selects a controllable device 200a having a specific frequency shift amount as a target device.

A specific implementation may be the same as or similar to that of step 806 shown in FIG. 8a. Details are not described herein.

According to the method provided in this embodiment of this application, when the user wants to control, by using the portable device 100, any controllable device 200a in a scenario in which the portable device 100 is located, the user may operate the portable device 100 to make a specific gesture toward the target device, to perform target device switching. This can resolve a problem in the conventional technology that a device control process is complicated and takes long time. In addition, a problem in the conventional technology that user privacy is leaked when the remote device 200 continuously collects an audio can be resolved.

An embodiment of this application further provides an identification method for target device selection, applied to a remote device. The remote device is wirelessly connected to a portable device, and the method includes: receiving a recording request message, and starting to collect an audio signal based on the recording request message; and providing the collected audio signal for the portable device.

In an implementation solution, providing the collected audio signal for the portable device may be sending the collected audio signal to the portable device through a wireless connection to the portable device.

In another implementation, providing the collected audio signal for the portable device may be storing the collected audio signal in a distributed database. The portable device may read a corresponding audio signal from the distributed database.

An embodiment of this application further provides an identification method for target device selection, applied to a remote device. The remote device is wirelessly connected to a portable device, and the method includes: receiving an audio playing request message, and sending an audio signal based on the audio playing request message.

In an implementation, a manner of sending the audio signal based on the audio playing request message may be playing an audio at an agreed frequency. The controllable device 200a may allocate a frequency band based on a specific frequency difference (for example, $\pm 0.5$ kHz), and each controllable device 200a and the portable device 100 pre-agree on a frequency for sending a high-frequency sound wave signal by the controllable device 200a. For example, there are three remote devices 200 in the scenario, and the three remote devices 200 are all controllable devices 200a. Frequencies of high-frequency sound wave signals sent by the three controllable devices 200a to the portable device 100 are respectively a frequency f, a frequency f-0.5 kHz, and a frequency f+0.5 kHz. Further, in an audio collection process, the portable device 100 may perform targeted collection based on agreed frequencies (the frequency f, the frequency f-0.5 kHz, and the frequency f+0.5 kHz), to collect the high-frequency sound wave signals sent by the three controllable devices 200a to the portable device 100.

An embodiment of this application further provides an interaction system, including: a portable device and a plurality of controllable devices. The portable device is wirelessly connected to the plurality of remote devices; and the portable device is configured to perform the following steps: detecting a first action of a user; in response to the first action, sending an audio signal, and sending a recording request message to the controllable device; obtaining an audio signal collected by the controllable device; and calculating a Doppler frequency shift amount corresponding to the audio signal collected by the controllable device, and determining a controllable device having a specific Doppler frequency shift amount as a target device. The controllable device is configured to perform the following steps: receiving the recording request message, and starting to collect the audio signal based on the recording request message; and providing the collected audio signal for the portable device.

An embodiment of this application further provides a portable device, including a processor and a memory. The memory is configured to store at least one instruction, and when the instruction is loaded and executed by the processor, the identification method for target device selection provided in corresponding embodiments of this application is implemented. A hardware structure of the portable device 100 in embodiments of this application may be shown in FIG. 4a, and a software structure of the portable device 100 may be shown in FIG. 4b.

An embodiment of this application further provides an interaction system, including the foregoing portable device and a plurality of the foregoing remote devices. The portable device is wirelessly connected to the plurality of remote devices.

In an implementation, the portable device constructs a distributed scenario with the plurality of remote devices, and the portable device and the plurality of remote devices log in to a same account.

An embodiment of this application further provides a computer-readable storage medium. The computer-readable storage medium stores a computer program. When the computer program is executed by a processor, the identification method for target device selection provided in any embodiment of this application is implemented.

It may be understood that the application may be an application (nativeApp) installed on a terminal, or may be a web page program (webApp) of a browser on a terminal. This is not limited in embodiments of this application.

It may be clearly understood by persons skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may also be implemented in a form of hardware plus a software functional unit.

When the foregoing integrated unit is implemented in a form of software functional unit, the integrated unit may be stored in a computer-readable storage medium. The software functional unit is stored in a storage medium and includes several instructions for instructing a computer apparatus (which may be a personal computer, a server, or a network apparatus) or a processor (processor) to perform a part of the steps of the methods described in embodiments of this application. The foregoing storage medium includes: any medium that can store program code, like a USB flash drive, a removable hard disk, a read-only memory (read-only memory, ROM), a random access memory (random access memory, RAM), a magnetic disk, or an optical disc.

The foregoing descriptions are merely preferred embodiments of this application, but are not intended to limit this application. Any modification, equivalent replacement, improvement, or the like made without departing from the spirit and principle of this application shall fall within the protection scope of this application.

Finally, it should be noted that the foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. An identification method for target device selection, applied to a portable device, wherein the portable device is wirelessly connected to a plurality of controllable devices, and the method comprises:

   detecting a first action of a user;
   in response to the first action, sending an audio signal, and sending a recording request message to the controllable device;
   obtaining an audio signal collected by the controllable device; and
   calculating a Doppler frequency shift amount corresponding to the audio signal collected by the controllable device, and determining a controllable device having a specific Doppler frequency shift amount as a target device.

2. The method according to claim 1, wherein that the portable device is wirelessly connected to a plurality of controllable devices comprises: establishing, by the portable device, near field communication connections to the plurality of controllable devices, wherein the near field communication connection comprises a Bluetooth communication connection or a Wi-Fi connection.

3. The method according to claim 1 or 2, wherein the portable device and the plurality of controllable devices log in to a same account.

4. The method according to claim 1, wherein before the detecting a first action of a user, the method further comprises: detecting the controllable device connected to the portable device, wherein
   the controllable device has at least an audio collection function.

5. The method according to claim 1, wherein before the calculating a Doppler frequency shift amount corresponding to the audio signal collected by the controllable device, and determining a controllable device having a specific Doppler frequency shift amount as a target device, the method further comprises:
   if a specified condition is met, stopping sending the audio signal, and sending a recording stop request message to the controllable device.

6. The method according to claim 5, wherein if the specified condition is met, the stopping sending the audio signal, and sending a recording stop request message to the controllable device comprises:

   detecting a second action of the user; and
   in response to the second action, stopping sending the audio signal, and sending the recording stop request message to the controllable device.

7. The method according to claim 6, wherein the first action is an action of a specific gesture, and the second action comprises the first action; and
   the specific gesture comprises the second action or the specific gesture is the second action.

8. The method according to claim 1, wherein if the specified condition is met, the stopping sending the audio signal, and sending a recording stop request message to the controllable device comprises:
   after specified time starting from detecting the first action of the user, stopping sending the audio signal, and sending the recording stop request message to the controllable device.

9. The method according to claim 1, wherein the determining a controllable device having a specific Doppler frequency shift amount as a target device comprises:
determining, based on the Doppler frequency shift amount corresponding to the audio signal collected by the controllable device, a controllable device having a largest Doppler frequency shift amount as the target device.

10. The method according to claim 1, wherein the determining a controllable device having a specific Doppler frequency shift amount as a target device comprises:

simulating a first waveform based on a frequency change generated by a horizontal component of a tangential velocity of a microphone of the portable device;
simulating, based on the Doppler frequency shift amount corresponding to the audio signal collected by the controllable device, a second waveform that corresponds to each controllable device and that is used to reflect a frequency shift change; and
screening out, from the plurality of second waveforms, a target second waveform with a highest similarity to the first waveform, and determining a controllable device corresponding to the target second waveform as the target device.

11. An identification method for target device selection, applied to a portable device, wherein the portable device is wirelessly connected to a plurality of controllable devices, and the method comprises:

detecting a first action of a user;
in response to the first action, collecting an audio signal, and sending an audio playing request message to the plurality of controllable devices; and
calculating a Doppler frequency shift amount corresponding to the collected audio signal, and determining a controllable device having a specific Doppler frequency shift amount as a target device.

12. The method according to claim 11, wherein in response to the first action, the collecting an audio signal, and sending an audio playing request message to the plurality of controllable devices comprises:

in response to the first action, sending the audio playing request message to the controllable devices, so that the controllable devices separately play audios based on agreed frequencies; and
in response to the first action, controlling a microphone of the portable device to collect, based on the agreed frequencies, the audios played by the controllable devices.

13. The method according to claim 12, wherein that the controllable devices separately play audios based on agreed frequencies comprises:
allocating, by the controllable device, a frequency band based on a specific frequency difference, and playing an audio at a corresponding frequency based on a frequency allocated to the controllable device.

14. The method according to claim 11, wherein before the calculating a Doppler frequency shift amount corresponding to the collected audio signal, and determining a controllable device having a specific Doppler frequency shift amount as a target device, the method further comprises:
if a specified condition is met, stopping collecting the audio signal, and sending an audio playing stop request message to the controllable devices.

15. An interaction system, wherein the system comprises a portable device and a plurality of controllable devices;

the portable device is wirelessly connected to the plurality of controllable devices;
the portable device is configured to perform the following steps:

detecting a first action of a user;
in response to the first action, sending an audio signal, and sending a recording request message to the controllable device;
obtaining an audio signal collected by the controllable device; and
calculating a Doppler frequency shift amount corresponding to the audio signal collected by the controllable device, and determining a controllable device having a specific Doppler frequency shift amount as a target device; and
the controllable device is configured to perform the following steps:

receiving the recording request message, and starting to collect the audio signal based on the recording request message; and
providing the collected audio signal for the portable device.

16. A portable device, wherein the device comprises:
a processor and a memory, wherein the memory is configured to store at least one instruction, and when the instruction is loaded and executed by the processor, the identification method for target device selection according to any one of claims 1 to 14 is implemented.

17. A computer-readable storage medium, wherein the computer-readable storage medium stores a computer program, and when the computer program is executed by a processor, the identification method for target device selection according to any one of claims 1 to 14 is implemented.

FIG. 1

FIG. 2

```
┌─────────────────────────────────────────────────────────────┐
│  A large-screen device continuously collects an ultrasonic    │      301
│                 signal in a working state                     │
└─────────────────────────────────────────────────────────────┘
                            │
                            ▼
┌─────────────────────────────────────────────────────────────┐
│  A mobile phone sends an ultrasonic wave in response to an    │      302
│                        instruction                            │
└─────────────────────────────────────────────────────────────┘
                            │
                            ▼
┌─────────────────────────────────────────────────────────────┐
│  The large-screen device calculates a Doppler frequency       │      303
│      shift of the collected ultrasonic signal                 │
└─────────────────────────────────────────────────────────────┘
                            │
                            ▼
┌─────────────────────────────────────────────────────────────┐
│  A large-screen device having a specific Doppler frequency    │      304
│  shift is a target device, and the mobile phone obtains       │
│           control right on the target device                  │
└─────────────────────────────────────────────────────────────┘
```

FIG. 3

Portable device 100

FIG. 4a

| Application layer | Camera | Calendar | Maps | WLAN | Music | Messages |
| | Gallery | Call | Navigation | Bluetooth | Videos | ... |

| Application framework layer | Window manager | Content provider | Phone manager | Resource manager |
| | Notification manager | View system | ... | |

| System library | Surface manager | Three-dimensional graphics processing library | Android runtime |
| | Two-dimensional graphics engine | Media library | ... | |

| Kernel layer | Display driver | Camera driver |
| | Audio driver | Sensor driver | ℯ |

FIG. 4b

FIG. 5

FIG. 6

Portable device 100

Enabling scenario identification

Gesture monitoring and sensing

Sound generation/Recording analysis

Communication

Discovery, notification, and connection

Remote device 200 — Sound generation/ Recording analysis

Remote device 200 — Sound generation/ Recording analysis

Remote device 200 — Sound generation/ Recording analysis

...

FIG. 7

A portable device detects a controllable device connected to the portable device in a current scenario ⟋⟍ 801

The portable device detects a first action of a user ⟋⟍ 802

In response to the first action, the portable device controls a speaker to send an audio signal, and sends a recording request message to the controllable device ⟋⟍ 803

If a specified condition is met, stop sending the audio signal, and send a recording stop request message to the controllable device ⟋⟍ 804

The portable device detects a second action of the user ⟋⟍ 804a

In response to the second action, the portable device controls the speaker to stop sending the audio signal, and sends the recording stop request message to the controllable device ⟋⟍ 804b

After specified time starting from detecting the first action of the user, the portable device controls the speaker to stop sending the audio signal, and sends the recording stop request message to the controllable device ⟋ 804s

The portable device obtains an audio signal collected by each controllable device ⟋⟍ 806

The portable device calculates a Doppler frequency shift amount corresponding to each audio signal, and selects a controllable device having a specific frequency shift amount as a target device ⟋ 807

FIG. 8a

200

200

200

Remote device

Remote device

Remote device

f

Portable device

100

FIG. 8b

FIG. 9

FIG. 10a

FIG. 10b

FIG. 11

Frequency generated by a
horizontal component of a
tangential velocity

Time

FIG. 12

Frequency

21.12 kHz

b

o

20 kHz

c

19.91 kHz

Time

a

FIG. 13

Frequency

20 kHz

Time

FIG. 14

| | |
|---|---|
| A portable device detects a controllable device in a current scenario | 901 |
| The portable device detects a first action of a user | 902 |
| In response to the first action, the portable device controls a microphone to collect an audio signal, and sends an audio playing request message to the controllable device | 903 |
| If a specified condition is met, stop collecting the audio signal, and send an audio playing stop request message to the controllable device | 904 |
| The portable device calculates a Doppler frequency shift amount corresponding to each audio signal, and selects a controllable device having a specific frequency shift amount as a target device | 905 |

FIG. 15

200                    200                    200

Remote device          Remote device          Remote device

①   f

②

③

Portable device

100

FIG. 16

200                    200                    200

Remote device          Remote device          Remote device

f

f–0.5 kHz

f+0.5 kHz

Portable device

100

FIG. 17

## INTERNATIONAL SEARCH REPORT

| International application No. |
|---|
| **PCT/CN2023/091573** |

| **A.** | **CLASSIFICATION OF SUBJECT MATTER** |
|---|---|

G06F21/44(2013.01)i

According to International Patent Classification (IPC) or to both national classification and IPC

| **B.** | **FIELDS SEARCHED** |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; DWPI; VEN; USTXT; EPTXT; WOTXT; CNKI: 便携, 设备, 目标, 音频, 超声波, 录音, 扬声器, 麦克风, 识别, 动作, 手势, 多普勒频移, 功耗, portable, device, target, audio, ultrasound, record, speaker, microphone, identify, action, gesture, doppler shift, consumption

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 108370494 A (THE BOARD OF REGENTS OF THE UNIVERSITY OF TEXAS SYSTEM) 03 August 2018 (2018-08-03) description, paragraphs 19-114, figures 1, 4A-4B | 1-17 |
| Y | US 2020064458 A1 (GOOGLE L.L.C.) 27 February 2020 (2020-02-27) claims 1-20, description, paragraphs 28-83, and figure 7 | 1-17 |
| Y | KR 20160097821 A (ELECTRONICS AND TELECOMMUNICATIONS RESEARCH INSTITUTE) 18 August 2016 (2016-08-18) description, paragraphs 21-84, figures 3, 5, 6 | 1-17 |
| Y | CN 109976625 A (ZTE CORP.) 05 July 2019 (2019-07-05) description, paragraphs 35-164 | 1-17 |
| A | CN 101344586 A (SOUTH CHINA UNIVERSITY OF TECHNOLOGY) 14 January 2009 (2009-01-14) entire document | 1-17 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2023** | **20 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091573**

| Patent document cited in search report | | | Publication date (day/month/year) | Patent family member(s) | | | Publication date (day/month/year) |
|---|---|---|---|---|---|---|---|
| CN | 108370494 | A | 03 August 2018 | WO | 2017096193 | A1 | 08 June 2017 |
| | | | | US | 2017164321 | A1 | 08 June 2017 |
| | | | | US | 10182414 | B2 | 15 January 2019 |
| | | | | CN | 108370494 | B | 17 May 2022 |
| US | 2020064458 | A1 | 27 February 2020 | TW | 202009684 | A | 01 March 2020 |
| | | | | US | 2021072370 | A1 | 11 March 2021 |
| | | | | US | 11435468 | B2 | 06 September 2022 |
| | | | | US | 10890653 | B2 | 12 January 2021 |
| | | | | WO | 2020040968 | A1 | 27 February 2020 |
| KR | 20160097821 | A | 18 August 2016 | None | | | |
| CN | 109976625 | A | 05 July 2019 | US | 2020294533 | A1 | 17 September 2020 |
| | | | | US | 11568888 | B2 | 31 January 2023 |
| | | | | WO | 2019129230 | A1 | 04 July 2019 |
| | | | | CN | 109976625 | B | 18 October 2022 |
| CN | 101344586 | A | 14 January 2009 | CN | 101344586 | B | 20 July 2011 |

Form PCT/ISA/210 (patent family annex) (July 2022)